# EUROPEAN PATENT APPLICATION

(11) **EP 4 752 684 A1**
(43) Date of publication of application: **03.06.2026**
(21) Application number: 24856662.2
(22) Date of filing: 17.07.2024
(51) Int. Cl.: G06F 3/01, G06F 3/00, G06F 3/04842, G06F 1/16, G06F 21/32

(54) **WEARABLE DEVICE AND METHOD FOR ADJUSTING BRIGHTNESS OF ENVIRONMENT, AND NON-TRANSITORY COMPUTER-READABLE RECORDING MEDIUM**

(30) Priority: 22.08.2023 KR 20230110182; 17.10.2023 KR 20230139085
(71) Applicant: Samsung Electronics Co., Ltd., Suwon-si, Gyeonggi-do 16677 (KR)
(72) Inventor: KANG, Jinmo, Suwon-si Gyeonggi-do 16677 (KR); LEE, Gunhee, Suwon-si Gyeonggi-do 16677 (KR); JUNG, Sunyoung, Suwon-si Gyeonggi-do 16677 (KR); KIM, Sungoh, Suwon-si Gyeonggi-do 16677 (KR); YEOM, Donghyun, Suwon-si Gyeonggi-do 16677 (KR)
(74) Representative: HGF
(86) International application number: PCT/KR2024/010321
(87) International publication number: WO 2025/042048

(57) **Abstract**

An electronic device is disclosed. The electronic device: may comprise at least one display arranged so as to face an eye of a user when the electronic device is worn on the user; may comprise at least one camera arranged so as to face the eye when the electronic device is worn on the user; and may be configured to acquire an authentication request of the user. The electronic device may be configured to, on the basis of acquiring the authentication request, identify at least one region in an environment visible to the user through the at least one display. The electronic device may be configured to control the at least one display so that the brightness of the identified at least one region is adjusted. The electronic device may be configured to acquire an iris image of the eye through the at least one camera while the brightness of the identified at least one region has been adjusted. The electronic device may be configured to authenticate the user on the basis of the iris of the eye identified in the iris image.

## Description

### [Technical Field]

The following descriptions relate to a wearable device, a method, and a non-transitory computer readable storage medium for adjusting brightness of an environment.

### [Background Art]

In order to provide an enhanced user experience, an electronic device that provides an augmented reality (AR) service displaying information generated by a computer in connection with an external object in the real-world is being developed. The electronic device may be a wearable device that may be worn by a user. For example, the electronic device may be AR glasses and/or a head-mounted device (HMD).

### [Disclosure]

### [Technical Solution]

An electronic device is disclosed. The electronic device may comprise at least one display arranged to face an eye of a user when the electronic device is worn by the user. The electronic device may comprise at least one camera arranged to face the eye when the electronic device is worn by the user. The electronic device may comprise at least one processor comprising processing circuitry. The electronic device may comprise memory comprising one or more storage media storing instructions. The instructions, when executed by the at least one processor individually or collectively, may cause the wearable device to obtain an authentication request of the user. The processor may cause the wearable device to, based on obtaining the authentication request, identify at least one area in an environment which is shown to the user through the at least one display. The instructions, when executed by the at least one processor individually or collectively, may cause the wearable device to control the at least one display to adjust brightness of the identified at least one area. The instructions, when executed by the at least one processor individually or collectively, may cause the wearable device to, during the brightness of the identified at least one area being adjusted, obtain an iris image of the eye through the at least one camera. The instructions, when executed by the at least one processor individually or collectively, may cause the wearable device to, based on an iris of the eye identified from the iris image, authenticate the user.

A method is disclosed. The method may be executed by an electronic device including at least one display arranged to face an eye of a user when the electronic device is worn by the user, and at least one camera arranged to face the eye when the electronic device is worn by the user. The method may comprise obtaining an authentication request of the user. The method may comprise, based on obtaining the authentication request, identifying at least one area in an environment which is shown to the user through the at least one display. The method may comprise controlling the at least one display to adjust brightness of the identified at least one area. The method may comprise, during the brightness of the identified at least one area being adjusted, obtaining an iris image of the eye through the at least one camera. The method may comprise, based on an iris of the eye identified from the iris image, authenticating the user.

A non-transitory computer readable storage medium is disclosed. The non-transitory computer readable storage medium may store a program comprising instructions. The instructions, when executed by at least one processor of an electronic device comprising at least one display arranged to face an eye of a user when the electronic device is worn by the user and at least one camera arranged to face the eye when the electronic device is worn by the user, may be configured to cause the electronic device to obtain an authentication request of the user. The processor may be configured to, based on obtaining the authentication request, identify at least one area in an environment which is shown to the user through the at least one display. The instructions, when executed by the at least one processor, may be configured to cause the electronic device to control the at least one display to adjust brightness of the identified at least one area. The instructions, when executed by the at least one processor, may be configured to cause the electronic device to, during the brightness of the identified at least one area being adjusted, obtain an iris image of the eye through the at least one camera. The instructions, when executed by the at least one processor, may be configured to cause the electronic device to, based on an iris of the eye identified from the iris image, authenticate the user.

### [Description of the Drawings]

FIG. 1 is a block diagram of an electronic device in a network environment according to various embodiments.
FIG. 2A illustrates an example of a perspective view of a wearable device according to an embodiment.
FIG. 2B illustrates an example of one or more hardware disposed in a wearable device according to an embodiment.
FIG. 3A illustrates an example of an exterior of a wearable device according to an embodiment.
FIG. 3B illustrates an example of an exterior of a wearable device according to an embodiment.
FIG. 4 is a block diagram of an electronic device according to an embodiment.
FIG. 5 illustrates an example of iris data obtained according to a state of an eye.
FIG. 6A illustrates an example of an environment which is shown to a user according to an embodiment.
FIG. 6B illustrates an example of an environment which is shown to a user according to an embodiment.
FIG. 6C illustrates an example of an environment which is shown to a user according to an embodiment.
FIG. 6D illustrates an example of an environment which is shown to a user according to an embodiment.
FIG. 6E illustrates an example of an environment which is shown to a user according to an embodiment.
FIG. 6F illustrates an example of an environment which is shown to a user according to an embodiment.
FIG. 7 illustrates an example of an environment which is shown to a user according to an embodiment.
FIG. 8 is a flowchart representing an operation of an electronic device according to an embodiment.
FIG. 9 is a flowchart representing an operation of an electronic device according to an embodiment.
FIG. 10 is a flowchart representing an operation of an electronic device according to an embodiment.
FIG. 11 is a flowchart representing an operation of an electronic device according to an embodiment.

### [Mode for Invention]

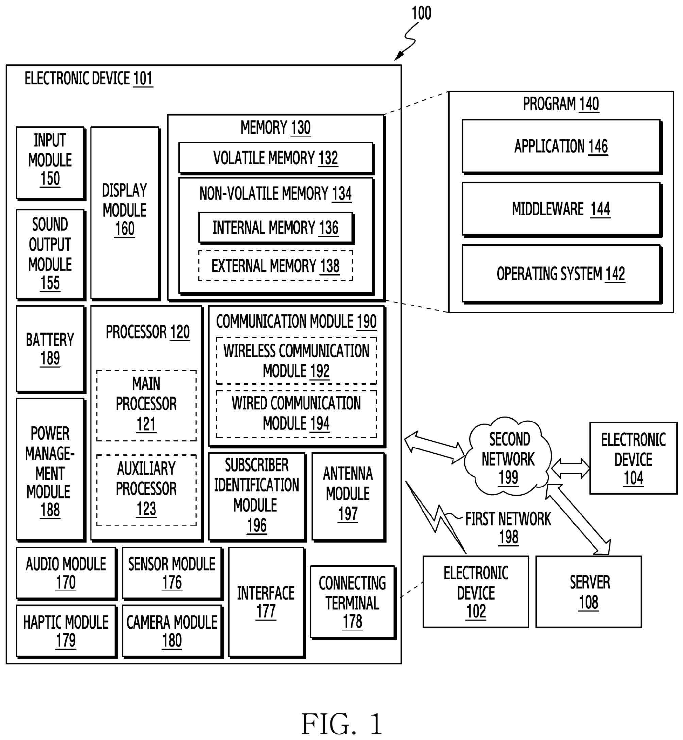

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

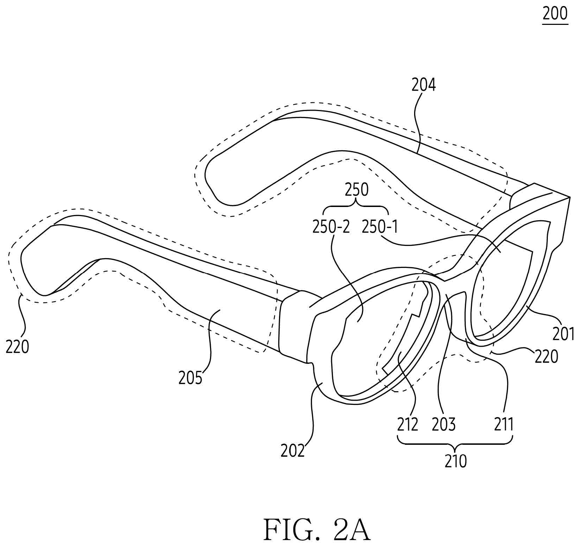

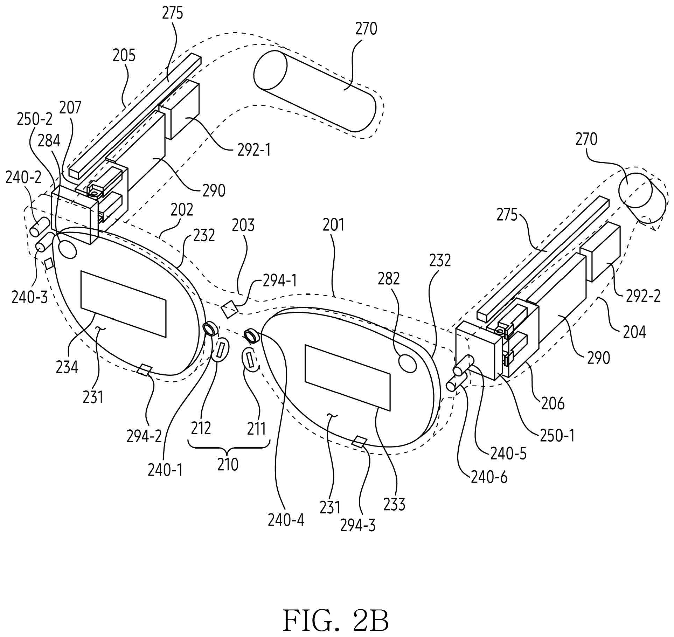

FIG. 2A illustrates an example of a perspective view of a wearable device 200 according to an embodiment. FIG. 2B illustrates an example of one or more hardware disposed in the wearable device 200 according to an embodiment. The wearable device 200 of FIGS. 2A and 2B may correspond to the electronic device 101 of FIG. 1. As shown in FIG. 2A, the wearable device 200 according to an embodiment may include at least one display 250 and a frame supporting the at least one display 250.

According to an embodiment, the wearable device 200 may be wearable on a portion of the user's body. The wearable device 200 may provide augmented reality (AR), virtual reality (VR), or mixed reality (MR) combining the augmented reality and the virtual reality to a user wearing the wearable device 200. For example, the wearable device 200 may output a virtual reality image through at least one display 250, in response to a user's preset gesture obtained through motion recognition cameras 240-2 and 240-5 of FIG. 2B.

According to an embodiment, the at least one display 250 in the wearable device 200 may provide visual information to a user. For example, the at least one display 250 may include a transparent or translucent lens. The at least one display 250 may include a first display 250-1 and/or a second display 250-2 spaced apart from the first display 250-1. For example, the first display 250-1 and the second display 250-2 may be disposed at positions corresponding to the user's left and right eyes, respectively.

Referring to FIG. 2B, the at least one display 250 may form a display area on the lens to provide a user wearing the wearable device 200 with visual information included in ambient light passing through the lens and other visual information distinct from the visual information. The lens may be formed based on at least one of a fresnel lens, a pancake lens, or a multi-channel lens. The display area formed by the at least one display 250 may be formed on the second surface 232 of the first surface 231 and the second surface 232 of the lens. When the user wears the wearable device 200, ambient light may be transmitted to the user by being incident on the first surface 231 and being penetrated through the second surface 232. For another example, the at least one display 250 may display a virtual reality image to be coupled with a reality screen transmitted through ambient light. The virtual reality image outputted from the at least one display 250 may be transmitted to eyes of the user, through one or more hardware (e.g., optical devices 282 and 284, and/or at least one waveguides 233 and 234) included in the wearable device 200.

According to an embodiment, the wearable device 200 may include waveguides 233 and 234 that transmit light transmitted from the at least one display 250 and relayed by the at least one optical device 282 and 284 by diffracting to the user. The waveguides 233 and 234 may be formed based on at least one of glass, plastic, or polymer. A nano pattern may be formed on at least a portion of the outside or inside of the waveguides 233 and 234. The nano pattern may be formed based on a grating structure having a polygonal or curved shape. Light incident to an end of the waveguides 233 and 234 may be propagated to another end of the waveguides 233 and 234 by the nano pattern. The waveguides 233 and 234 may include at least one of at least one diffraction element (e.g., a diffractive optical element (DOE), a holographic optical element (HOE)), and a reflection element (e.g., a reflection mirror). For example, the waveguides 233 and 234 may be disposed in the wearable device 200 to guide a screen displayed by the at least one display 250 to the user's eyes. For example, the screen may be transmitted to the user's eyes through total internal reflection (TIR) generated in the waveguides 233 and 234.

According to an embodiment, the wearable device 200 may analyze an object included in a real image collected through photographing cameras 240-3 and 240-6, combine with a virtual object corresponding to an object that become a subject of augmented reality provision among the analyzed object, and display on the at least one display 250. The virtual object may include at least one of text and images for various information associated with the object included in the real image. The wearable device 200 may analyze the object based on a multi-camera such as a stereo camera. For the object analysis, the wearable device 200 may execute time-of-flight (ToF) and/or simultaneous localization and mapping (SLAM) supported by the multi-camera. The user wearing the wearable device 200 may watch an image displayed on the at least one display 250.

According to an embodiment, a frame may be configured with a physical structure in which the wearable device 200 may be worn on the user's body. According to an embodiment, the frame may be configured so that when the user wears the wearable device 200, the first display 250-1 and the second display 250-2 may be positioned corresponding to the user's left and right eyes. The frame may support the at least one display 250. For example, the frame may support the first display 250-1 and the second display 250-2 to be positioned at positions corresponding to the user's left and right eyes.

Referring to FIG. 2A, according to an embodiment, the frame may include an area 220 at least partially in contact with the portion of the user's body in case that the user wears the wearable device 200. For example, the area 220 of the frame in contact with the portion of the user's body may include an area in contact with a portion of the user's nose, a portion of the user's ear, and a portion of the side of the user's face that the wearable device 200 contacts. According to an embodiment, the frame may include a nose pad 210 that is contacted on the portion of the user's body. When the wearable device 200 is worn by the user, the nose pad 210 may be contacted on the portion of the user's nose. The frame may include a first temple 204 and a second temple 205, which are contacted on another portion of the user's body that is distinct from the portion of the user's body.

According to an embodiment, the frame may include a first rim 201 surrounding at least a portion of the first display 250-1, a second rim 202 surrounding at least a portion of the second display 250-2, a bridge 203 disposed between the first rim 201 and the second rim 202, a first pad 211 disposed along a portion of the edge of the first rim 201 from one end of the bridge 203, a second pad 212 disposed along a portion of the edge of the second rim 202 from the other end of the bridge 203, the first temple 204 extending from the first rim 201 and fixed to a portion of the wearer's ear, and the second temple 205 extending from the second rim 202 and fixed to a portion of the ear opposite to the ear. The first pad 211 and the second pad 212 may be in contact with the portion of the user's nose, and the first temple 204 and the second temple 205 may be in contact with a portion of the user's face and the portion of the user's ear. The temples 204 and 205 may be rotatably connected to the rim through hinge units 206 and 207 of FIG. 2B. The first temple 204 may be rotatably connected with respect to the first rim 201 through the first hinge unit 206 disposed between the first rim 201 and the first temple 204. The second temple 205 may be rotatably connected with respect to the second rim 202 through the second hinge unit 207 disposed between the second rim 202 and the second temple 205. According to an embodiment, the wearable device 200 may identify an external object (e.g., a user's fingertip) touching the frame and/or a gesture performed by the external object by using a touch sensor, a grip sensor, and/or a proximity sensor formed on at least a portion of the surface of the frame.

According to an embodiment, the wearable device 200 may include hardware that performs various functions. For example, the hardware may include a battery module 270, an antenna module 275, optical devices 282 and 284, speakers 292-1 and 292-2, microphones 294-1, 294-2, and 294-3, a light emitting module (not illustrated), and/or a printed circuit board (PCB) 290. Various hardware may be disposed in the frame.

According to an embodiment, the microphones 294-1, 294-2, and 294-3 of the wearable device 200 may obtain a sound signal, by being disposed on at least a portion of the frame. The first microphone 294-1 disposed on the nose pad 210, the second microphone 294-2 disposed on the second rim 202, and the third microphone 294-3 disposed on the first rim 201 are illustrated in FIG. 2B, but the number and disposition of the microphone 294 are not limited to an embodiment of FIG. 2B. In a case that the number of the microphone 294 included in the wearable device 200 is two or more, the wearable device 200 may identify a direction of the sound signal by using a plurality of microphones disposed on different portions of the frame.

According to an embodiment, the optical devices 282 and 284 may transmit a virtual object transmitted from the at least one display 250 to the wave guides 233 and 234. For example, the optical devices 282 and 284 may be projectors. The optical devices 282 and 284 may be disposed adjacent to the at least one display 250 or may be included in the at least one display 250 as a portion of the at least one display 250. The first optical device 282 may correspond to the first display 250-1, and the second optical device 284 may correspond to the second display 250-2. The first optical device 282 may transmit light outputted from the first display 250-1 to the first waveguide 233, and the second optical device 284 may transmit light outputted from the second display 250-2 to the second waveguide 234.

In an embodiment, a camera may include eye tracking camera (ET CAM) 240-1 and 240-4, motion recognition camera 240-2 and 240-5 and/or the photographing camera 240-3 and 240-6. The photographing camera, the eye tracking camera 240-1 and 240-4, and the motion recognition camera 240-2 and 240-5 may be disposed at different positions on the frame and may perform different functions. The eye tracking camera 240-1 and 240-4 may output data indicating a gaze of the user wearing the wearable device 200. For example, the wearable device 200 may detect the gaze from an image including the user's pupil, obtained through the eye tracking camera 240-1 and 240-4. An example in which the eye tracking camera 240-1 and 240-4 are disposed toward the user's right eye is illustrated in FIG. 2B, but the embodiment is not limited thereto, and the eye tracking camera 240-1 and 240-4 may be disposed alone toward the user's left eye or may be disposed toward two eyes.

In an embodiment, the photographing camera 240-3 and 240-6 may photograph a real image or background to be matched with a virtual image in order to implement the augmented reality or mixed reality content. The photographing camera may photograph an image of a specific object existing at a position viewed by the user and may provide the image to the at least one display 250. The at least one display 250 may display one image in which a virtual image provided through the optical devices 282 and 284 is overlapped with information on the real image or background including the image of the specific object obtained by using the photographing camera. In an embodiment, the photographing camera may be disposed on the bridge 203 disposed between the first rim 201 and the second rim 202.

In an embodiment, the eye tracking camera 240-1 and 240-4 may implement a more realistic augmented reality by matching the user's gaze with the visual information provided on the at least one display 250, by tracking the gaze of the user wearing the wearable device 200. For example, when the user looks at the front, the wearable device 200 may naturally display environment information associated with the user's front on the at least one display 250 at a position where the user is positioned. The eye tracking camera 240-1 and 240-4 may be configured to capture an image of the user's pupil in order to determine the user's gaze. For example, the eye tracking camera 240-1 and 240-4 may receive gaze detection light reflected from the user's pupil and may track the user's gaze based on the position and movement of the received gaze detection light. In an embodiment, the eye tracking camera 240-1 and 240-4 may be disposed at a position corresponding to the user's left and right eyes. For example, the eye tracking camera 240-1 and 240-4 may be disposed in the first rim 201 and/or the second rim 202 to face the direction in which the user wearing the wearable device 200 is positioned.

The motion recognition camera 240-2 and 240-5 may provide a specific event to the screen provided on the at least one display 250 by recognizing the movement of the whole or portion of the user's body, such as the user's torso, hand, or face. The motion recognition camera 240-2 and 240-5 may obtain a signal corresponding to motion by recognizing the user's gesture, and may provide a display corresponding to the signal to the at least one display 250. A processor may identify a signal corresponding to the operation and may perform a preset function based on the identification. In an embodiment, the motion recognition camera 240-2 and 240-5 may be disposed on the first rim 201 and/or the second rim 202.

In an embodiment, the camera included in the wearable device 200 are not limited to the above-described eye tracking camera 240-1 and 240-4 and the motion recognition camera 240-2 and 240-5. For example, the wearable device 200 may identify an external object included in the FoV by using the photographing camera 240-3 and 240- 6 disposed toward the user's FoV. Identifying of the external object by the wearable device 200 may be performed through a sensor for identifying a distance between the wearable device 200 and the external object, such as a depth sensor and/or a time of flight (ToF) sensor. The camera disposed toward the FoV may support an autofocus function and/or an optical image stabilization (OIS) function. For example, the wearable device 200 may include a camera (e.g., a face tracking (FT) camera) disposed toward a face of a user wearing the wearable device 200 to obtain an image including the user's face.

Although not illustrated, the wearable device 200 according to an embodiment may further include a light source (e.g., LED) that emits light toward a subject (e.g., user's eyes, face, and/or an external object in the FoV) photographed by using the camera. The light source may include an LED having an infrared wavelength. The light source may be disposed on at least one of the frame, and the hinge units 206 and 207.

According to an embodiment, the battery module 270 may supply power to electronic components of the wearable device 200. In an embodiment, the battery module 270 may be disposed in the first temple 204 and/or the second temple 205. For example, the battery module 270 may be a plurality of battery modules 270. The plurality of battery modules 270, respectively, may be disposed on each of the first temple 204 and the second temple 205. In an embodiment, the battery module 270 may be disposed at an end of the first temple 204 and/or the second temple 205.

According to an embodiment, the antenna module 275 may transmit the signal or power to the outside of the wearable device 200 or may receive the signal or power from the outside. The antenna module 275 may be electrically and/or operably connected to the communication module 190 of FIG. 1. In an embodiment, the antenna module 275 may be disposed in the first temple 204 and/or the second temple 205. For example, the antenna module 275 may be disposed close to one surface of the first temple 204 and/or the second temple 205.

According to an embodiment, the speakers 292-1 and 292-2 may output a sound signal to the outside of the wearable device 200. A sound output module may be referred to as a speaker. In an embodiment, the speakers 292-1 and 292-2 may be disposed in the first temple 204 and/or the second temple 205 in order to be disposed adjacent to the ear of the user wearing the wearable device 200. For example, the wearable device 200 may include a second speaker 292-2 disposed adjacent to the user's left ear by being disposed in the first temple 204, and a first speaker 292-1 disposed adjacent to the user's right ear by being disposed in the second temple 205.

In an embodiment, the light emitting module (not illustrated) may include at least one light emitting element. The light emitting module may emit light of a color corresponding to a specific state or may emit light through an operation corresponding to the specific state in order to visually provide information on a specific state of the wearable device 200 to the user. For example, when the wearable device 200 requires charging, it may repeatedly emit red light at a designated timing. In an embodiment, the light emitting module may be disposed on the first rim 201 and/or the second rim 202.

Referring to FIG. 2B, according to an embodiment, the wearable device 200 may include the printed circuit board (PCB) 290. The PCB 290 may be included in at least one of the first temple 204 or the second temple 205. The PCB 290 may include an interposer disposed between at least two sub PCBs. On the PCB 290, one or more hardware included in the wearable device 200 may be disposed. The wearable device 200 may include a flexible PCB (FPCB) for interconnecting the hardware.

According to an embodiment, the wearable device 200 may include at least one of a gyro sensor, a gravity sensor, and/or an acceleration sensor for detecting the posture of the wearable device 200 and/or the posture of a body part (e.g., a head) of the user wearing the wearable device 200. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 200 may identify the user's motion and/or gesture performed to execute or stop a specific function of the wearable device 200 based on the IMU.

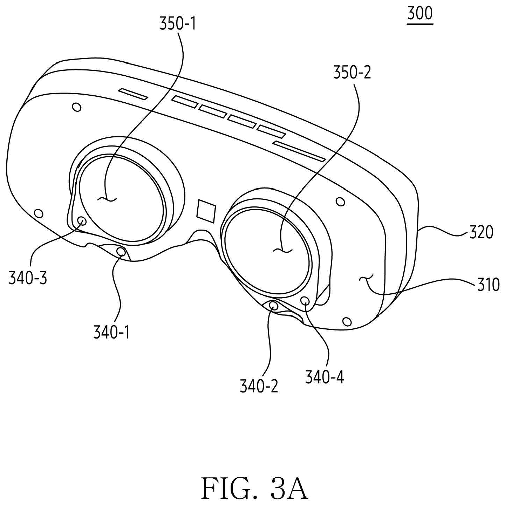

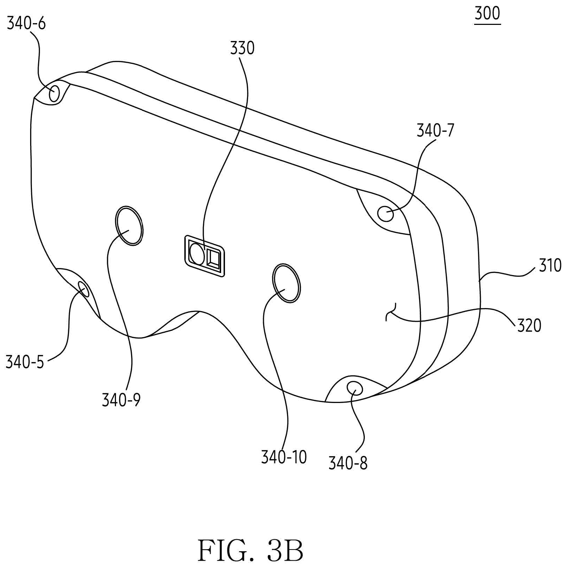

FIGS. 3A to 3B illustrate an example of an exterior of a wearable device 300 according to an embodiment. The wearable device 300 of FIGS. 3A to 3B may be included in the electronic device 21 of FIG. 1. According to an embodiment, an example of an exterior of a first surface 310 of a housing of the wearable device 300 may be illustrated in FIG. 3A, and an example of an exterior of a second surface 320 opposite to the first surface 310 may be illustrated in FIG. 3B.

Referring to FIG. 3A, according to an embodiment, the first surface 310 of the wearable device 300 may have an attachable shape on the user's body part (e.g., the user's face). Although not illustrated, the wearable device 300 may further include a strap for being fixed on the user's body part, and/or one or more temples (e.g., the first temple 204 and/or the second temple 205 of FIGS. 2A to 2B). A first display 350-1 for outputting an image to the left eye among the user's two eyes and a second display 350-2 for outputting an image to the right eye among the user's two eyes may be disposed on the first surface 310. The wearable device 300 may further include rubber or silicon packing, which are formed on the first surface 310, for preventing interference by light (e.g., ambient light) different from the light emitted from the first display 350-1 and the second display 350-2.

According to an embodiment, the wearable device 300 may include cameras 340-1 and 340-2 for photographing and/or tracking two eyes of the user adjacent to each of the first display 350-1 and the second display 350-2. The cameras 340-1 and 340-2 may be referred to as ET camera. According to an embodiment, the wearable device 300 may include cameras 340-3 and 340-4 for photographing and/or recognizing the user's face. The cameras 340-3 and 340-4 may be referred to as a FT camera.

Referring to FIG. 3B, a camera (e.g., cameras 340-5, 340-6, 340-7, 340-8, 340-9, and 340-10), and/or a sensor (e.g., the depth sensor 330) for obtaining information associated with the external environment of the wearable device 300 may be disposed on the second surface 320 opposite to the first surface 310 of FIG. 3A. For example, the cameras 340-5, 340-6, 340-7, 340-8, 340-9, and 340-10 may be disposed on the second surface 320 in order to recognize an external object distinct from the wearable device 300. For example, by using cameras 340-9 and 340-10, the wearable device 300 may obtain an image and/or video to be transmitted to each of the user's two eyes. The camera 340-9 may be disposed on the second surface 320 of the wearable device 300 to obtain an image to be displayed through the second display 350-2 corresponding to the right eye among the two eyes. The camera 340-10 may be disposed on the second surface 320 of the wearable device 300 to obtain an image to be displayed through the first display 350-1 corresponding to the left eye among the two eyes.

According to an embodiment, the wearable device 300 may include the depth sensor 330 disposed on the second surface 320 in order to identify a distance between the wearable device 300 and the external object. By using the depth sensor 330, the wearable device 300 may obtain spatial information (e.g., a depth map) about at least a portion of the FoV of the user wearing the wearable device 300.

Although not illustrated, a microphone for obtaining sound outputted from the external object may be disposed on the second surface 320 of the wearable device 300. The number of microphones may be one or more according to embodiments.

As described above, the wearable device 300 according to an embodiment may have a form factor for being worn on the user's head. The wearable device 300 may provide a user experience based on augmented reality, virtual reality, and/or mixed reality in a state of being worn on the head. Using the cameras 340-5, 340-6, 340-7, 340-8, 340-9, and 340-10 for recording a video for an external space, the wearable device 300 and a server (e.g., the server 108 of FIG. 1) connected to the wearable device 300 may provide an on-demand service and/or a metaverse service providing a video of a location and/or a place selected by the user.

According to an embodiment, the wearable device 300 may display frames obtained through the cameras 340-9 and 340-10 on each of the first display 350-1 and the second display 350-2. The wearable device 300 may provide the user with a user experience (e.g., a video see-through (VST)) in which a real object and a virtual object are mixed, by combining the virtual object in a frame that is displayed through the first display 350-1 and the second display 350-2 and that includes the real object. The wearable device 300 may change the virtual object based on information obtained by the cameras 340-1, 340-2, 340-3, 340-4, 340-5, 340-6, 340-7, and 340-8 and/or the depth sensor 330. For example, in a case that a visual object corresponding to the real object and the virtual object are at least partially superimposed in the frame, the wearable device 300 may cease displaying the virtual object based on detecting a motion to interact with the real object. By ceasing displaying the virtual object, the wearable device 300 may prevent visibility of the real object from being reduced as the visual object corresponding to the real object is occluded by the virtual object.

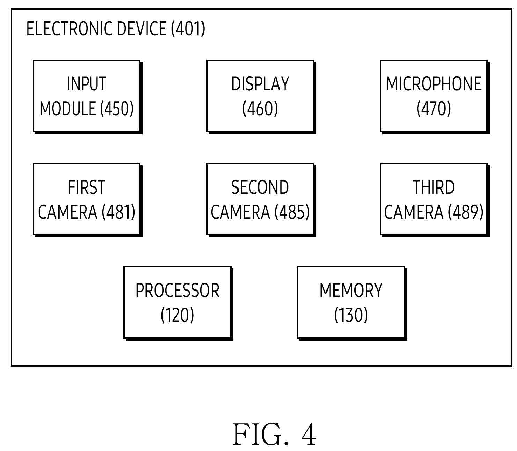

FIG. 4 is a block diagram of an electronic device 401 according to an embodiment.

Referring to FIG. 4, the electronic device 401 may include an input module 450, a display 460, a microphone 470, a first camera 481, a second camera 485, a third camera 489, a processor 120, and memory 130.

The input module 450 of FIG. 4 may correspond to the input module 150 of FIG. 1. The display 460 of FIG. 4 may correspond to the display module 160 of FIG. 1. The display 460 of FIG. 4 may correspond to the display 250, 250-1, or 250-2 of FIGS. 2A and 2B. The display 460 of FIG. 4 may correspond to the display 350-1 or 350-2 of FIGS. 3A and 3B. The microphone 470 of FIG. 4 may correspond to the audio module 170 of FIG. 1. The microphone 470 of FIG. 4 may correspond to the microphones 294-1, 294-2, and 294-3 of FIGS. 2A and 2B. The cameras 481, 485, and 489 of FIG. 4 may correspond to the camera module 180 of FIG. 1. The first camera 481 of FIG. 4 may correspond to the photographing camera 240-3 and/or 240-6 of FIGS. 2A and 2B. It may correspond to the photographing camera 340-9 and/or 340-10 of FIGS. 3A and 3B. The second camera 485 of FIG. 4 may correspond to the photographing camera 240-1 and/or 240-4 of FIGS. 2A and 2B. The second camera 485 of FIG. 4 may correspond to the gaze tracking camera 340-1 and/or 340-2 of FIGS. 3A and 3B. The second camera 485 of FIG. 4 may correspond to the gaze tracking camera 240-1 and/or 240-4 of FIGS. 2A and 2B. The third camera 489 of FIG. 4 may correspond to the gaze tracking camera 340-1 and/or 340-2 of FIGS. 3A and 3B. The cameras 485 and 489 of FIG. 4 may be one integrated camera. The processor 120 of FIG. 4 may correspond to the processor 120 of FIG. 1. The memory 130 of FIG. 4 may correspond to the memory 130 of FIG. 1.

Hereinafter, it describes an operation in which the electronic device 401 performs user authentication in an environment which is shown to a user (or in a field of view of the user).

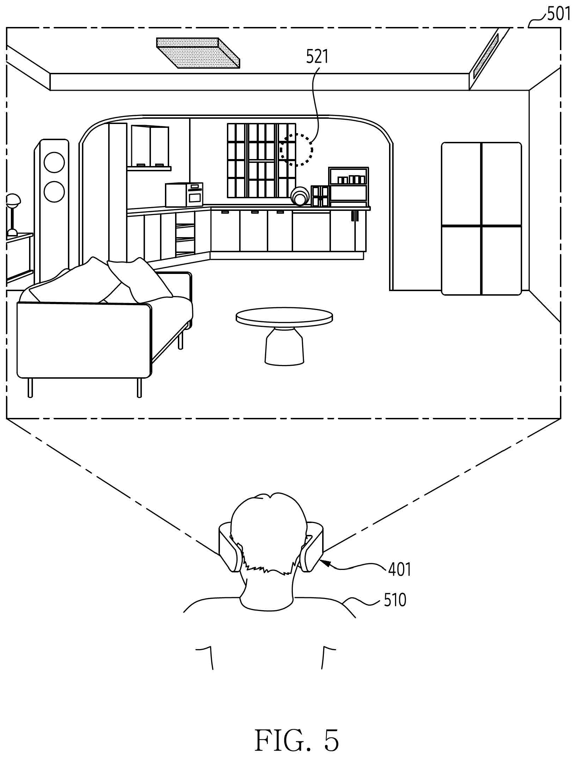

FIG. 5 illustrates an example of an environment which is shown to a user according to an embodiment.

FIG. 5 may be described with reference to FIGS. 1, 2A, 2B, 3A, 3B, and 4. Hereinafter, a first camera 481 may be a camera photographing an environment which is shown to a user 510 (or a field of view (FOV) of the user), a second camera 485 may be a camera for iris recognition, and a third camera 489 may be a gaze tracking camera.

FIG. 5 exemplifies an environment 501 which is shown to the user 510 (or the field of view (FOV) of the user) in a state in which the user 510 wears an electronic device 401.

In an embodiment, a processor 120 of the electronic device 401 may provide the user 510 with augmented reality (AR), virtual reality (VR), or mixed reality (MR) in which the augmented reality and the virtual reality are mixed.

In an embodiment, the augmented reality (AR) may be an environment in which at least one image object is displayed (or superimposed) in an external environment displayed to the user 510 through (or passing through) a display 460, 250, 250-1, 250-2, 350-1, or 350-2. For example, the augmented reality (AR) may be a see-through environment. The augmented reality (AR), for example, may include a method in which external light passes through the display 460, 250, 250-1, 250-2, 350-1, or 350-2 and reaches the user 510 directly and/or a method in which an image representing the external environment photographed through the first camera 481 is displayed through the display 460, 250, 250-1, 250-2, 350-1, or 350-2 and is displayed to the user 510. However, it is not limited thereto. For example, the image representing the external environment photographed through the first camera 481 may be an image having a binocular parallax. For example, the image representing the external environment photographed through the first camera 481 may be a stereoscopic image.

The virtual reality (VR) may be an environment in which a virtual environment distinguished from an external environment (or not reflecting the external environment) rendered through the processor 120 is shown to the user 510 through the display 460, 250, 250-1, 250-2, 350-1, or 350-2.

Hereinafter, the environment 501 of FIG. 5 may be exemplified as being the augmented reality. However, it is not limited thereto. For example, the environment 501 of FIG. 5 may be the virtual reality, or the mixed reality in which the augmented reality and the virtual reality are mixed.

In an embodiment, the processor 120 may identify and/or track a gaze 521 of the user 510. For example, the processor 120 may identify the gaze 521 of the user 510 based on images obtained from the third camera 489 for eye tracking (ET). For example, the images obtained from the third camera 489 may be a glint image. For example, the processor 120 may identify the gaze 521 of the user 510 based on a location of an eye included in the images obtained from the third camera 489. For example, the processor 120 may identify the gaze 521 of the user 510 based on a location of an iris included in the images obtained from the third camera 489. For example, the processor 120 may identify the gaze 521 of the user 510 by tracking the location of the iris. However, it is not limited thereto.

In an embodiment, the processor 120 may obtain an authentication request from the user 510. For example, the processor 120 may obtain the authentication request based on iris recognition. For example, the processor 120 may obtain the authentication request while the environment 501 is provided to the user 510. For example, the processor 120 may obtain the authentication request based on iris recognition generated by a program 140 while the program 140 is being executed.

In an embodiment, in response to the authentication request of the user 510, the processor 120 may determine whether user authentication based on the iris recognition is possible. In an embodiment, in response to the authentication request based on the iris of the user 510, the processor 120 may determine whether the iris recognition is possible.

In an embodiment, based on a size of the iris of the eye of the user 510, the processor 120 may determine whether the user authentication based on the iris recognition is possible. For example, the processor 120 may identify the size of the iris based on an eye image of the user 510 obtained through the second camera 485. The processor 120 may determine whether the iris recognition is possible based on the size of the iris identified based on the eye image. For example, in a case that the size of the iris is greater than a specified first size, the iris recognition may be determined to be possible. For example, in a case that the size of the iris is less than or equal to the specified first size, the iris recognition may be determined to be not possible. Based on a second size of a pupil identified based on the eye image, the processor 120 may determine whether the iris recognition is possible. For example, in a case that the second size of the pupil is less than or equal to a specified second size, the iris recognition may be determined to be possible. For example, in a case that the second size of the pupil is greater than the specified second size, the iris recognition may be determined to be not possible. For example, the specified first size and/or the specified second size may be preset.

In an embodiment, in a case that it is determined that the user authentication based on the iris recognition is possible, the processor 120 may authenticate the user based on the iris recognition using the image obtained through the second camera 485. In an embodiment, in a case that the size of the iris is greater than the specified first size, the processor 120 may authenticate the user based on the iris recognition using the image for the iris recognition. In an embodiment, in a case that the iris recognition using the image for the iris recognition fails, the processor 120 may perform an operation for increasing the size of the iris of the eye of the user 510.

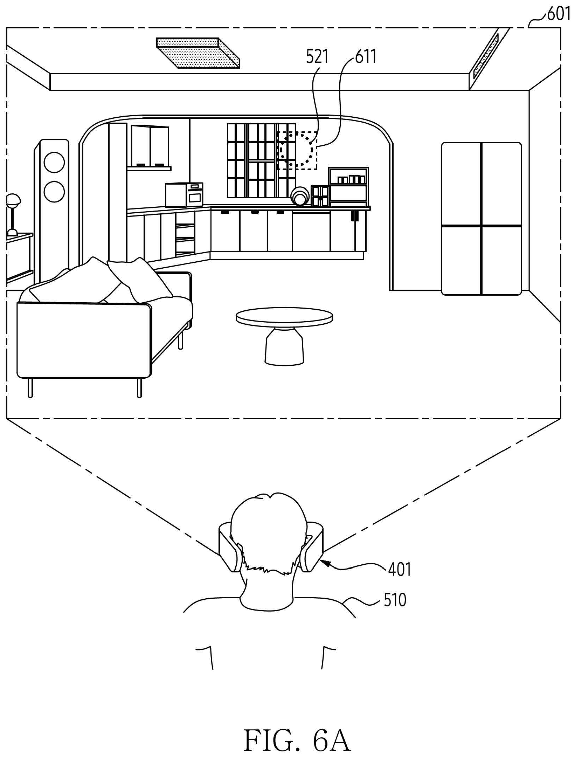

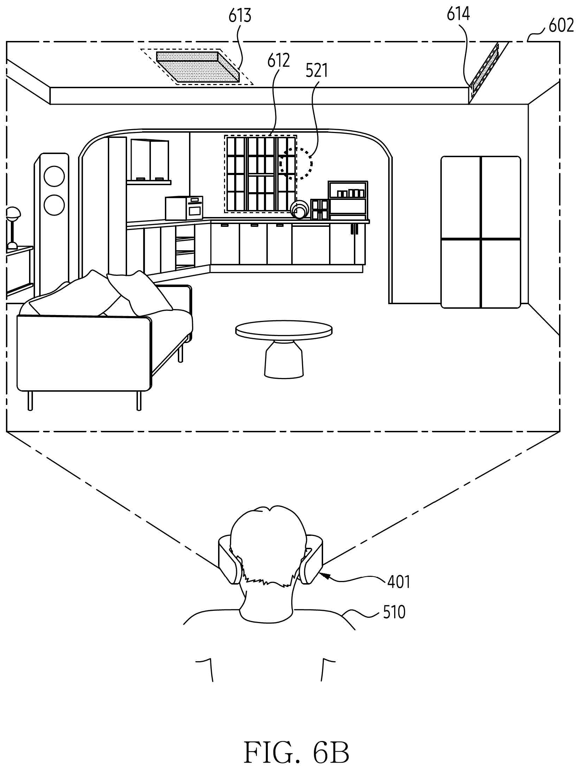

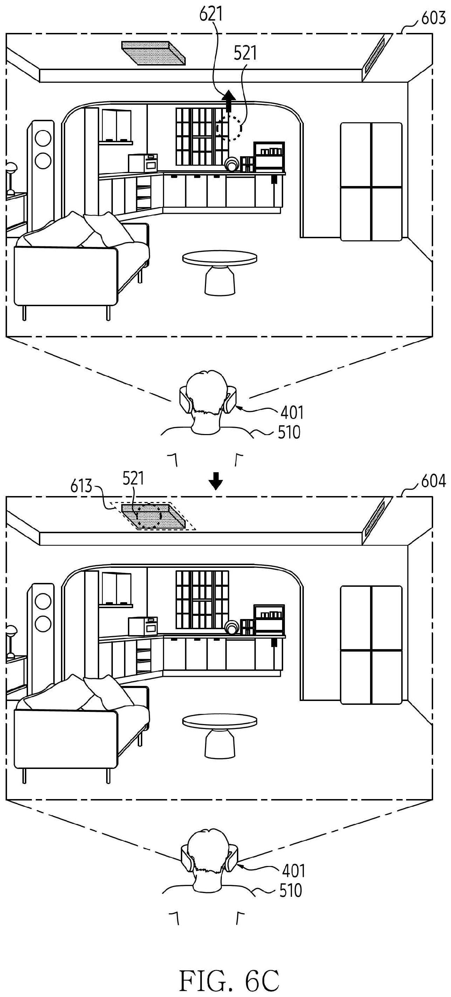

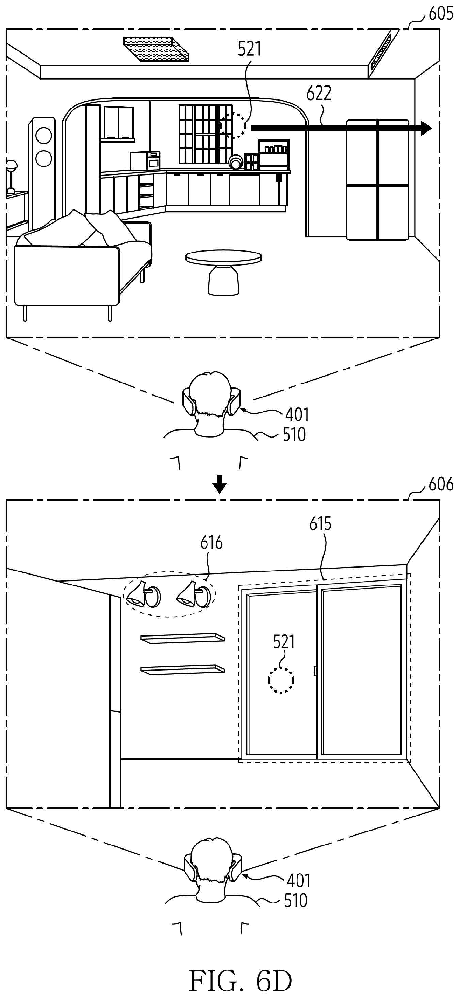

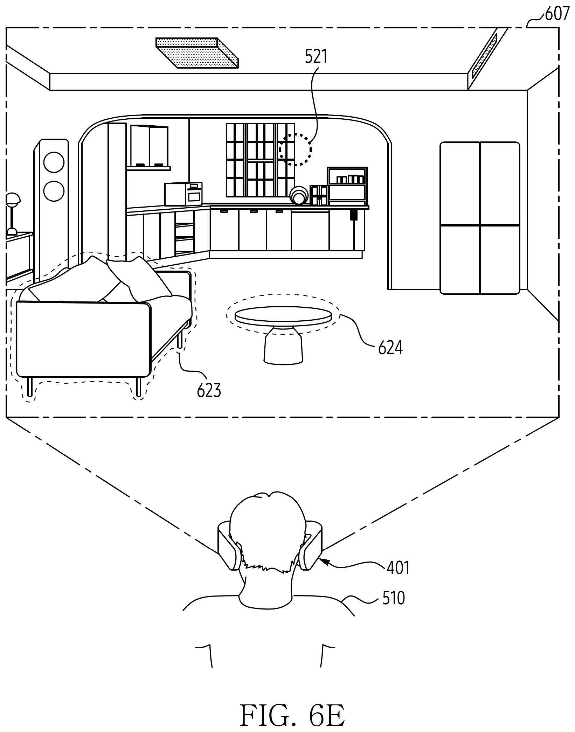

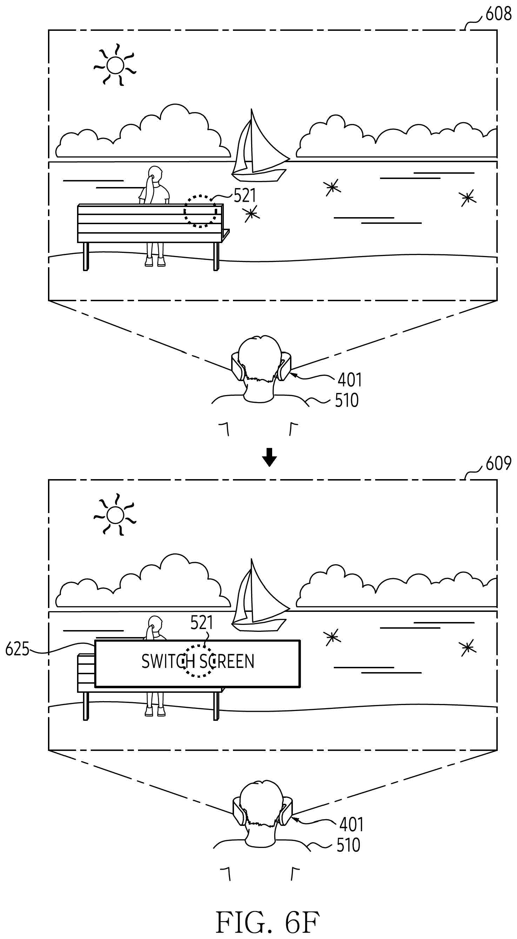

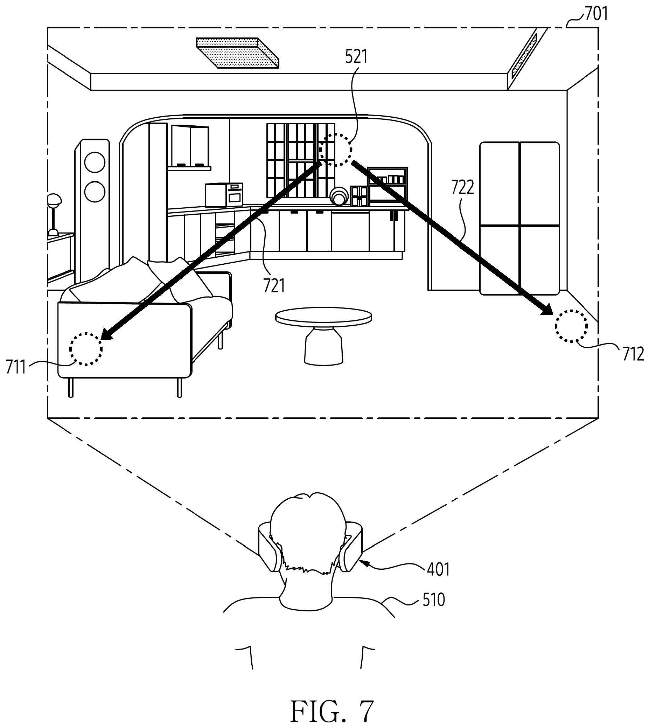

In an embodiment, in a case that it is determined that the user authentication based on the iris recognition is not possible, the processor 120 may perform the operation for increasing the size of the iris of the eye of the user 510. In an embodiment, in a case that the iris recognition using the image for the iris recognition fails, the processor 120 may perform the operation for increasing the size of the iris of the eye of the user 510. Hereinafter, the operation for increasing the size of the iris of the eye of the user 510 of the electronic device 401 will be described with reference to FIGS. 6A, 6B, 6C, 6D, 6E, 6F, and 7.

Hereinafter, an operation in which the electronic device 401 adjusts brightness of an area where the gaze 521 of the user 510 is located will be described.

FIG. 6A illustrates an example of an environment which is shown to a user according to an embodiment.

FIG. 6A may be described with reference to FIGS. 1, 2A, 2B, 3A, 3B, 4, and 5. Hereinafter, a first camera 481 may be a camera photographing an environment which is shown to a user 510 (or a field of view (FOV) of the user), a second camera 485 may be a camera for iris recognition, and a third camera 489 may be a gaze tracking camera.

FIG. 6A exemplifies an environment 601 which is shown to the user 510 (or the field of view of the user) in a state in which the user 510 wears an electronic device 401. The environment 601 of FIG. 6A may be shown to the user 510 after the environment 501 of FIG. 5 is shown to the user 510. Hereinafter, the environment which is shown to the user (or the field of view of the user) may be referred to as an environment.

In an embodiment, a processor 120 may select an area 611 in the environment 601. In an embodiment, in a case that it is determined that user authentication based on iris recognition is not possible, the processor 120 may select the area 611 in the environment 601. In an embodiment, the processor 120 may select the area 611 in the environment 601, in order to perform an operation for increasing a size of an iris of an eye of the user 510. In an embodiment, in a case that iris recognition using an image for the iris recognition fails, the processor 120 may select the area 611 in the environment 601. In an embodiment, in a case that the iris recognition using the image for the iris recognition fails before performing the operation for increasing the size of the iris of the eye of the user 510, the processor 120 may select the area 611 in the environment 601. In an embodiment, the processor 120 may select the area 611 having brightness greater than or equal to specified brightness in the environment 601, in order to perform the operation for increasing the size of the iris of the eye of the user 510. In an embodiment, in a case that the user authentication based on the iris recognition fails due to insufficient brightness of an area where a gaze 521 of the user 510 is located, the processor 120 may select the area 611 having the brightness greater than or equal to the specified brightness in the environment 601, in order to perform the operation for increasing the size of the iris of the eye of the user 510.

In an embodiment, the processor 120 may select the area 611 where the gaze 521 of the user is located in the environment 601. In an embodiment, the processor 120 may select the area 611 where the gaze 521 of the user 510 identified based on images obtained through the third camera 489 for ET is located. In an embodiment, the processor 120 may identify the area 611 where the gaze 521 is located. In an embodiment, the processor 120 may select the area 611 located within a specified distance from the gaze 521. In an embodiment, the processor 120 may identify the area 611 located within the specified distance from the gaze 521. However, it is not limited thereto. In an embodiment, the processor 120 may select at least one area located outside the specified distance from the gaze 521. In an embodiment, the processor 120 may identify the at least one area located outside the specified distance from the gaze 521.

In an embodiment, the processor 120 may adjust (e.g., increase) the brightness of the selected area 611. In an embodiment, in a case that it is determined that the user authentication based on the iris recognition is not possible, the processor 120 may adjust (e.g., increase) the brightness of the selected area 611. As the brightness of the area 611 in the environment 601 is adjusted (e.g., increased), the size of the iris of the eye of the user 510 may be increased. Herein, adjusting (e.g., increasing) brightness may mean adjusting transparency of a transparent or translucent lens included in the at least one display 250 in the wearable device 200 of FIGS. 2A and 2B to be transparent. For example, by increasing the transparency of the transparent or translucent lens included in the at least one display 250 in the wearable device 200 of FIGS. 2A and 2B, an intensity of external light passing through the lens of the display 250 may be increased. For example, adjusting (e.g., increasing) brightness may mean increasing brightness of an area displayed through the at least one display 250 in the wearable device 200 of FIGS. 2A and 2B. For example, adjusting (e.g., increasing) brightness may mean increasing an intensity of light emitted from an area selected from an image displayed through the at least one display 250, in order to provide augmented reality (AR), virtual reality (VR), or mixed reality (MR) that combines the augmented reality and the virtual reality. For example, adjusting (e.g., increasing) brightness may mean increasing brightness of an area displayed through the at least one display 350-1 and/or 350-2 in the wearable device 300 of FIGS. 3A and 3B. For example, adjusting (e.g., increasing) brightness may mean increasing an intensity of light emitted from an area selected from an image displayed through the at least one display 350-1 and/or 350-2, in order to provide the augmented reality (AR), the virtual reality (VR), or the mixed reality (MR). For example, adjusting (e.g., increasing) brightness may mean superimposing a transparent and/or translucent layer on the image displayed through the at least one display 350-1 and/or 350-2, in order to provide the augmented reality (AR), the virtual reality (VR), or the mixed reality (MR). Herein, the transparent and/or translucent layer may have brightness greater than or equal to specified brightness in the area selected from the image. In the layer, another area other than the area selected from the image may be transparent. In the layer, the area selected from the image may have the brightness greater than or equal to the specified brightness.

In an embodiment, the processor 120 may obtain an eye image through the second camera 485. In an embodiment, the processor 120 may obtain an image for the iris recognition through the second camera 485. The image for the iris recognition may include an image object representing the eye of the user 510. The image for the iris recognition may include an image object representing the iris of the eye of the user 510.

In an embodiment, the processor 120 may obtain the image for the iris recognition while brightness of the environment 601 is adjusted. In an embodiment, the processor 120 may obtain the image for the iris recognition while the brightness of the area 611 in the environment 601 is adjusted. In an embodiment, the processor 120 may obtain the image for the iris recognition while the brightness of the area 611 where the gaze 521 of the user 510 in the environment 601 is located is adjusted.

In an embodiment, the processor 120 may authenticate the user 510 based on an iris included in the image for the iris recognition. In an embodiment, the processor 120 may authenticate the user 510 based on the iris included in the image for the iris recognition obtained while the brightness of the area 611 is adjusted. In an embodiment, the processor 120 may authenticate the user 510 based on the iris included in the image for the iris recognition obtained while the brightness of the area 611 where the gaze 521 is located is adjusted.

As described above, when adjusting brightness for the iris recognition, the electronic device 401 may reduce inconvenience (e.g., glare) to the user 510 by optimizing an intensity of light for the iris recognition. When adjusting the brightness for the iris recognition, the electronic device 401 may reduce inconvenience (e.g., glare) to the user 510 by optimizing an intensity of light in the area 611 where the gaze 521 of the user 510 is located.

Hereinafter, an operation in which the electronic device 401 adjusts brightness of an area that may be brightly expressed in the field of view (or the environment) of the user 510 will be described.

FIG. 6B illustrates an example of an environment which is shown to a user according to an embodiment.

FIG. 6B may be described with reference to FIGS. 1, 2A, 2B, 3A, 3B, 4, and 5. Hereinafter, a first camera 481 may be a camera photographing an environment which is shown to a user 510 (or a field of view (FOV) of the user), a second camera 485 may be a camera for iris recognition, and a third camera 489 may be a gaze tracking camera.

FIG. 6B exemplifies an environment 602 which is shown to the user 510 (or the field of view of the user) in a state in which the user 510 wears an electronic device 401. The environment 602 of FIG. 6B may be shown to the user 510 after the environment 501 of FIG. 5 is shown to the user 510. Hereinafter, the environment which is shown to the user (or the field of view of the user) may be referred to as an environment.

In an embodiment, a processor 120 may perform an operation for increasing a size of an iris of an eye of the user 510. In an embodiment, in a case that user authentication based on iris recognition fails due to insufficient brightness of an area where a gaze 521 of the user 510 is located, the processor 120 may perform the operation for increasing the size of the iris of the eye of the user 510.

In an embodiment, the processor 120 may analyze the environment 602. In an embodiment, the analysis of the environment 602 may be performed in a background. In an embodiment, the processor 120 may be in a state in which the analysis of the environment 602 is being continuously performed. For example, analyzing the environment 602 may mean identifying one or more objects in an image representing the environment 602 obtained through the first camera 481. For example, analyzing the environment 602 may mean identifying the one or more objects in the image representing the environment 602 obtained through the first camera 481 while augmented reality (AR) and/or mixed reality (MR) is provided to the user 510. However, it is not limited thereto. For example, analyzing the environment 602 may mean identifying the one or more objects in the image representing the environment 602 displayed through a display 460, 250, 250-1, 250-2, 350-1, or 350-2. For example, analyzing the environment 602 may mean identifying the one or more objects in the image representing the environment 602 displayed through the display 460, 250, 250-1, 250-2, 350-1, or 350-2 while virtual reality (VR) and/or mixed reality (MR) is provided to the user 510.

In an embodiment, in a case that it is determined that the user authentication based on the iris recognition is not possible, the processor 120 may identify at least one area 612, 613, and/or 614 in the analyzed environment 602. In an embodiment, in a case that the environment 602 has brightness that the user authentication is not possible, the processor 120 may identify the at least one area 612, 613, and/or 614 in the analyzed environment 602. In an embodiment, the processor 120 may identify the at least one area 612, 613, and/or 614 in the analyzed environment 602 in order to perform the operation for increasing the size of the iris of the eye of the user 510. In an embodiment, in a case that the iris recognition using an image for the iris recognition fails, the processor 120 may identify the at least one area 612, 613, and/or 614 in the analyzed environment 602. In an embodiment, in a case that the iris recognition using the image for the iris recognition fails before performing the operation for increasing the size of the iris of the eye of the user 510, the processor 120 may identify the at least one area 612, 613, and/or 614 in the analyzed environment 602.

In an embodiment, the processor 120 may select the at least one area 612, 613, and/or 614 in the environment 602. In an embodiment, the processor 120 may select the at least one area 612, 613, and/or 614 identified in the analyzed environment 602. In an embodiment, the processor 120 may select the at least one area 612, 613, and/or 614 that may be brightly expressed in the environment 602, in order to perform the operation for increasing the size of the iris of the eye of the user 510. In an embodiment, in a case that the user authentication based on the iris recognition fails due to insufficient brightness of the area where the gaze 521 of the user 510 is located, the processor 120 may select the at least one area 612, 613, and/or 614 that may be brightly expressed in the environment 602, in order to perform the operation for increasing the size of the iris of the eye of the user 510.

In an embodiment, the processor 120 may select the at least one area 612, 613, and/or 614 of at least one object that may be brightly expressed in the environment 602. In an embodiment, the processor 120 may identify the at least one area 612, 613, and/or 614 of the at least one object. In an embodiment, the processor 120 may select the at least one area 612, 613, and/or 614 located within a specified distance from the at least one object that may be brightly expressed in the environment 602. In an embodiment, the processor 120 may identify the at least one area 612, 613, and/or 614 located within the specified distance from the at least one object. For example, the at least one object that may be brightly expressed may include lighting, a window, and an object that reflects and/or emits light (e.g., the moon, a star, a sea, and/or a glossy object).

Referring to FIG. 6B, the processor 120 may select the area 612 including a window in the environment 602. In an embodiment, the processor 120 may select the area 613 including an illumination in the environment 602. In an embodiment, the processor 120 may select the area 614 including an indirect illumination in the environment 602. However, it is not limited thereto. In an embodiment, the processor 120 may select an area including an object capable of emitting light (e.g., a television (TV) or a display device) in the environment 602 and/or an object through which external light may be transmitted or reflected (e.g., a mirror and/or a glossy object).

In an embodiment, the processor 120 may select (and/or identify) at least one object from among one or more objects that may be brightly expressed in the environment 602. In an embodiment, the processor 120 may select (and/or identify) the at least one area 612, 613, and/or 614 based on the selected at least one object. For example, the processor 120 may select (and/or identify) at least one object among the window, the illumination, or the indirect illumination, and select (and/or identify) the at least one area 612, 613, and/or 614 corresponding to the selected object.

In an embodiment, the processor 120 may select (and/or identify) at least one object adjacent to the gaze 521 of the user 510 from among the one or more objects that may be brightly expressed in the environment 602. Herein, the at least one object being adjacent to the gaze 521, may mean that the at least one object is located within a specified distance from the gaze 521. However, it is not limited thereto. For example, the processor 120 may select (and/or identify) at least one object outside the specified distance from the gaze 521 of the user 510 from among the one or more objects that may be brightly expressed in the environment 602.

In an embodiment, the processor 120 may select (and/or identify) the specified number of objects from among the one or more objects that may be brightly expressed in the environment 602. Herein, the specified number may be the number of objects required to increase the size of the iris of the user 510. The specified number may be changed by brightness of the environment 602. For example, the specified number in a case that the environment 602 is bright may be less than the specified number in a case that the environment 602 is dark.

In an embodiment, the processor 120 may adjust (e.g., increase) brightness of the at least one area 612, 613, and/or 614. In an embodiment, in a case that it is determined that the user authentication based on the iris recognition is not possible, the processor 120 may adjust (e.g., increase) the brightness of the at least one area 612, 613, and/or 614. As the brightness of the at least one area 612, 613, and/or 614 in the environment 602 is adjusted (e.g., increased), the size of the iris of the eye of the user 510 may be increased. Herein, adjusting (e.g., increasing) brightness may mean adjusting transparency of a transparent or translucent lens included in the at least one display 250 in the wearable device 200 of FIGS. 2A and/or 2B to be transparent. For example, adjusting (e.g., increasing) brightness may mean increasing brightness of an area displayed through the at least one display 250 in the wearable device 200 of FIGS. 2A and/or 2B. For example, adjusting (e.g., increasing) brightness may mean increasing brightness of an area displayed through the at least one display 350-1 and/or 350-2 in the wearable device 300 of FIGS. 3A and/or 3B. For example, adjusting (e.g., increasing) brightness may mean superimposing a transparent and/or translucent layer on the image displayed through the at least one display 350-1 and/or 350-2 to provide augmented reality (AR), virtual reality (VR), or mixed reality (MR). Herein, the transparent and/or translucent layer may have brightness greater than or equal to specified brightness in the area selected from the image. In the layer, another area other than the area selected from the image may be transparent. In the layer, the area selected from the image may have the brightness greater than or equal to the specified brightness.

In an embodiment, the processor 120 may obtain an eye image through the second camera 485. In an embodiment, the processor 120 may obtain an image for the iris recognition through the second camera 485.

In an embodiment, the processor 120 may obtain the image for the iris recognition while brightness of the environment 602 is adjusted. In an embodiment, the processor 120 may obtain the image for the iris recognition while the brightness of the at least one area 612, 613, and/or 614 in the environment 602 is adjusted. In an embodiment, the processor 120 may obtain the image for the iris recognition while the brightness of the at least one area 612, 613, and/or 614 of the at least one object that may be brightly expressed in the environment 602 is adjusted.

In an embodiment, the processor 120 may authenticate the user 510 based on an iris included in the image for the iris recognition. In an embodiment, the processor 120 may authenticate the user 510 based on the iris included in the image for the iris recognition obtained while the brightness of the at least one area 612, 613, and/or 614 is adjusted.

As described above, when adjusting brightness for the iris recognition, the electronic device 401 may reduce inconvenience (e.g., glare) to the user 510 by optimizing an intensity of light for the iris recognition. When adjusting the brightness for the iris recognition, the electronic device 401 may provide the user 510 with the environment 602 in which brightness is naturally adjusted (or minimize a sense of heterogeneity of the user 510), by optimizing an intensity of light in the at least one area 612, 613, and/or 614 of the object that may be brightly expressed in the environment 602.

Hereinafter, an operation of adjusting brightness of the environment which is shown to the user to be uniform by the electronic device 401 will be described.

In an embodiment, the processor 120 may perform the operation for increasing the size of the iris of the eye of the user 510. In an embodiment, in a case that the user authentication based on the iris recognition fails due to insufficient brightness of the area where the gaze 521 of the user 510 is located, the processor 120 may perform the operation for increasing the size of the iris of the eye of the user 510.

In an embodiment, the processor 120 may analyze the environment 602. In an embodiment, the processor 120 may identify the at least one relatively bright area 612, 613, and/or 614 and at least one relatively dark area in the environment 602. For example, the at least one relatively bright area 612, 613, and/or 614 may be an area including lighting, a window, and an object that reflects and/or emits light (e.g., the moon, a star, a sea, and/or a glossy object). For example, the at least one relatively dark area may be an area including an object that absorbs light (e.g., a matte object or an object having a dark color tone) and/or a shadow.

In an embodiment, the processor 120 may adjust the brightness of the environment 602 to be uniform. In an embodiment, the processor 120 may reduce brightness of the at least one relatively bright area 612, 613, and/or 614 in the environment 602 and increase the brightness of the at least one relatively dark area. Herein, increasing brightness may mean adjusting transparency of the transparent or translucent lens included in the at least one display 250 in the wearable device 200 of FIGS. 2A and 2B to be transparent. For example, increasing brightness may mean increasing brightness of the area displayed through the at least one display 250 in the wearable device 200 of FIGS. 2A and 2B. For example, increasing brightness may mean increasing brightness of the area displayed through the at least one display 350-1 and/or 350-2 in the wearable device 300 of FIGS. 3A and 3B. For example, increasing brightness may mean superimposing (or overlaying) an additional layer and a visual object above the image displayed through the at least one display 350-1 and/or 350-2 in the wearable device 300 of FIGS. 3A and 3B. For example, increasing brightness may mean superimposing (or overlaying) a transparent and/or translucent layer and a visual object above an image obtained through the first camera 481 photographing a front of the electronic device 401. Herein, the transparent and/or translucent layer may have brightness greater than or equal to specified brightness in an area selected from an image. In the layer, another area other than the area selected from the image may be transparent. In the layer, the area selected from the image may have the brightness greater than or equal to the specified brightness. For example, reducing brightness may mean adjusting the transparency of the transparent or translucent lens included in the at least one display 250 in the wearable device 200 of FIGS. 2A and 2B to be opaque. For example, reducing brightness may mean reducing brightness of the area displayed through the at least one display 250 in the wearable device 200 of FIGS. 2A and 2B. For example, reducing brightness may mean reducing brightness of the area displayed through the at least one display 350-1 and/or 350-2 in the wearable device 300 of FIGS. 3A and 3B. For example, increasing brightness may mean superimposing (or overlaying) the additional layer and the visual object above the image displayed through the at least one display 350-1 and/or 350-2 in the wearable device 300 of FIGS. 3A and 3B. For example, increasing brightness may mean superimposing (or overlaying) the transparent and/or translucent layer and the visual object above the image obtained through the first camera 481 photographing the front of the electronic device 401. Herein, the transparent and/or translucent layer may have brightness less than the specified brightness in the area selected from the image. In the layer, another area other than the area selected from the image may be transparent. In the layer, the area selected from the image may have the brightness greater than or equal to the specified brightness.

In an embodiment, the processor 120 may obtain an eye image through the second camera 485. In an embodiment, the processor 120 may obtain an image for the iris recognition through the second camera 485.

In an embodiment, the processor 120 may obtain the image for the iris recognition while the brightness of the environment 602 is adjusted to be uniform. In an embodiment, the processor 120 may obtain the image for the iris recognition while the brightness of the at least one relatively bright area 612, 613, and/or 614 is reduced and the brightness of the at least one relatively dark area is increased.

In an embodiment, the processor 120 may authenticate the user 510 based on an iris included in the image for the iris recognition. In an embodiment, the processor 120 may authenticate the user 510 based on an iris included in the image for the iris recognition obtained while the brightness of the at least one relatively bright area 612, 613, and/or 614 is reduced and the brightness of the at least one relatively dark area is increased.

As described above, when adjusting brightness for the iris recognition, the electronic device 401 may reduce inconvenience (e.g., glare) to the user 510 by adjusting an intensity of light for the iris recognition to be uniform.

Hereinafter, an operation in which the electronic device 401 guides movement of the gaze 521 of the user 510 to an area that may be brightly expressed in the field of view (or the environment) of the user 510 will be described.

FIG. 6C illustrates an example of an environment which is shown to a user according to an embodiment.

FIG. 6C may be described with reference to FIGS. 1, 2A, 2B, 3A, 3B, 4, and 5. Hereinafter, a first camera 481 may be a camera photographing an environment which is shown to a user 510 (or a field of view (FOV) of the user), a second camera 485 may be a camera for iris recognition, and a third camera 489 may be a gaze tracking camera.

FIG. 6C exemplifies environments 603 and 604 which are shown to the user 510 (or fields of view of the user) in a state in which the user 510 wears an electronic device 401. The environments 603 and 604 of FIG. 6C may be shown to the user 510 after the environment 501 of FIG. 5 is shown to the user 510. The environment 604 of FIG. 6C may be shown to the user 510 after the environment 603 of FIG. 6C is shown to the user 510. Hereinafter, the environment which is shown to the user (or the field of view of the user) may be referred to as an environment.

In an embodiment, a processor 120 may perform an operation for increasing a size of an iris of an eye of the user 510. In an embodiment, in a case that user authentication based on iris recognition fails due to insufficient brightness of an area where a gaze 521 of the user 510 is located, the processor 120 may perform the operation for increasing the size of the iris of the eye of the user 510.

In an embodiment, the processor 120 may analyze the environment 603. In an embodiment, the analysis of the environment 603 may be performed in a background. In an embodiment, the processor 120 may be in a state in which the analysis of the environment 603 is being continuously performed. For example, analyzing the environment 603 may mean identifying one or more objects in an image representing the environment 603 displayed through a display 460, 250, 250-1, 250-2, 350-1, or 350-2. For example, analyzing the environment 603 may mean identifying the one or more objects in the image representing the environment 603 displayed through the display 460, 250, 250-1, 250-2, 350-1, or 350-2 while virtual reality (VR) and/or mixed reality (MR) is provided to the user 510.

In an embodiment, the processor 120 may display an image object 621 guiding movement of the gaze 521 of the user 510. In an embodiment, in a case that it is determined that the user authentication based on the iris recognition is not possible, the processor 120 may display the image object 621 guiding the movement of the gaze 521 of the user 510. In an embodiment, the processor 120 may display the image object 621 guiding the movement of the gaze 521 of the user 510, in order to perform the operation for increasing the size of the iris of the eye of the user 510. In an embodiment, in a case that the iris recognition using an image for the iris recognition fails, the processor 120 may display the image object 621 guiding the movement of the gaze 521 of the user 510. In an embodiment, in a case that the iris recognition using the image for the iris recognition fails before performing the operation for increasing the size of the iris of the eye of the user 510, the processor 120 may display the image object 621 guiding the movement of the gaze 521 of the user 510.

In an embodiment, the processor 120 may display the image object 621 based on analyzing the environment 603. In an embodiment, the processor 120 may display the image object 621 based on a location of at least one object that may be brightly expressed in the environment 603. For example, the processor 120 may display the image object 621 guiding movement of the gaze 521 to the at least one object that may be brightly expressed in the environment 603. For example, the processor 120 may display the image object 621 based on the at least one object that may be brightly expressed in the environment 603 being separated from the gaze 521 by a specified distance or more. For example, the at least one object that may be brightly expressed may include lighting, a window, and an object that reflects and/or emits light (e.g., the moon, a star, a sea, and/or a glossy object).

In an embodiment, the processor 120 may display the image object 621 based on the location of the at least one object that may be brightly expressed in the environment 603, in order to perform the operation for increasing the size of the iris of the eye of the user 510. In an embodiment, in a case that the user authentication based on the iris recognition fails due to insufficient brightness of an area where a gaze 521 of the user 510 is located, the processor 120, may display the image object 621 based on the location of the at least one object that may be brightly expressed in the environment 603, in order to perform the operation for increasing the size of the iris of the eye of the user 510.

Referring to FIG. 6C, the processor 120 may display the image object 621 guiding movement of the gaze 521 of the user 510 to lighting in the environment 603. However, it is not limited thereto. In an embodiment, the processor 120 may display an image object guiding movement of the gaze 521 of the user 510 to an object capable of emitting light (e.g., a television (TV) or a display device) in the environment 603 and/or an object through which external light may be transmitted or reflected (e.g., a mirror and/or a glossy object).

In an embodiment, the processor 120 may select (and/or identify) at least one object from among one or more objects that may be brightly expressed in the environment 603. In an embodiment, the processor 120 may display the image object 621 guiding movement of the gaze 521 of the user 510 based on the selected at least one object. For example, the processor 120 may select (and/or identify) at least one object among a window, an illumination, or an indirect illumination, and display the image object 621 guiding the movement of the gaze 521 of the user 510 to the selected object.

In an embodiment, the processor 120 may display the image object 621 guiding movement of the gaze 521 of the user 510 to at least one object adjacent to the gaze 521 of the user 510 from among the one or more objects that may be brightly expressed in the environment 603. Herein, the at least one object being adjacent to the gaze 521, may mean that the at least one object is located within a specified distance from the gaze 521. However, it is not limited thereto. For example, the processor 120 may display the image object 621 guiding movement of the gaze 521 of the user 510 to at least one object outside the specified distance from the gaze 521 of the user 510 from among the one or more objects that may be brightly expressed in the environment 603.

In an embodiment, the processor 120 may identify and/or track the gaze 521 of the user 510. For example, the processor 120 may identify the gaze 521 of the user 510 based on images obtained from the third camera 489. In an embodiment, the processor 120 may identify and/or track the gaze 521 of the user 510 after displaying the image object 621. In an embodiment, the processor 120 may identify that the gaze 521 is moved to at least one object that may be brightly expressed. In an embodiment, the processor 120 may identify that the gaze 521 is moved in a direction (and/or a location) indicated by the image object 621.

In an embodiment, the processor 120 may adjust (e.g., increase) brightness of a selected area 613. In an embodiment, in a case that it is determined that the user authentication based on the iris recognition is not possible, the processor 120 may adjust (e.g., increase) the brightness of the selected area 613. As the brightness of the selected area 613 in the environment 604 is adjusted (e.g., increased), the size of the iris of the eye of the user 510 may be increased. Herein, adjusting (e.g., increasing) brightness may mean adjusting transparency of a transparent or translucent lens included in the at least one display 250 in the wearable device 200 of FIGS. 2A and/or 2B to be transparent. For example, adjusting (e.g., increasing) brightness may mean increasing brightness of an area displayed through the at least one display 250 in the wearable device 200 of FIGS. 2A and/or 2B. For example, adjusting (e.g., increasing) brightness may mean increasing brightness of an area displayed through the at least one display 350-1 and/or 350-2 in the wearable device 300 of FIGS. 3A and/or 3B. For example, adjusting (e.g., increasing) brightness may mean superimposing a transparent and/or translucent layer on the image displayed through the at least one display 350-1 and/or 350-2 to provide augmented reality (AR), virtual reality (VR), or mixed reality (MR). Herein, the transparent and/or translucent layer may have brightness greater than or equal to specified brightness in the area selected from the image. In the layer, another area other than the area selected from the image may be transparent. In the layer, the area selected from the image may have the brightness greater than or equal to the specified brightness.

In an embodiment, the processor 120 may obtain an eye image through the second camera 485. In an embodiment, the processor 120 may obtain an image for the iris recognition through the second camera 485.

In an embodiment, the processor 120 may obtain the image for the iris recognition while brightness of the environment 604 is adjusted. In an embodiment, the processor 120 may obtain the image for the iris recognition while the brightness of the area 613 in the environment 604 is adjusted. In an embodiment, the processor 120 may obtain the image for the iris recognition while the brightness of the area 613 of the user 510 in the environment 604 is adjusted.

In an embodiment, the processor 120 may authenticate the user 510 based on an iris included in the image for the iris recognition. In an embodiment, the processor 120 may authenticate the user 510 based on the iris included in the image for the iris recognition obtained while the brightness of the area 613 is adjusted.

As described above, when adjusting brightness for the iris recognition, the electronic device 401 may reduce inconvenience (e.g., glare) to the user 510 by optimizing an intensity of light for the iris recognition. When adjusting the brightness for the iris recognition, the electronic device 401 may relatively less increase an intensity of light of the area 613 where the gaze 521 is located, by inducing the gaze 521 of the user 510 to an object that may be brightly expressed in the environment 604.

Hereinafter, an operation in which the electronic device 401 guides movement of the user to an area that may be brightly expressed in a previous field of view (or environment) will be described.

FIG. 6D illustrates an example of an environment which is shown to a user according to an embodiment.

FIG. 6D may be described with reference to FIGS. 1, 2A, 2B, 3A, 3B, 4, and 5. Hereinafter, a first camera 481 may be a camera photographing an environment which is shown to a user 510 (or a field of view (FOV) of the user), a second camera 485 may be a camera for iris recognition, and a third camera 489 may be a gaze tracking camera.

FIG. 6D exemplifies environments 605 and 605 which are shown to the user 510 (or fields of view of the user) in a state in which the user 510 wears an electronic device 401. The environments 605 and 606 of FIG. 6D may be shown to the user 510 after the environment 501 of FIG. 5 is shown to the user 510. The environment 606 of FIG. 6D may be shown to the user 510 after the environment 605 of FIG. 6D is shown to the user 510. Hereinafter, the environment which is shown to the user (or the field of view of the user) may be referred to as an environment.

In an embodiment, a processor 120 may perform an operation for increasing a size of an iris of an eye of the user 510. In an embodiment, in a case that user authentication based on iris recognition fails due to insufficient brightness of an area where a gaze 521 of the user 510 is located, the processor 120 may perform the operation for increasing the size of the iris of the eye of the user 510.

In an embodiment, the processor 120 may analyze the environment 605 and/or the environment 606 provided to the user 510 before the environment 605. In an embodiment, the analysis of the environment 605 and/or the environment 606 provided to the user 510 before the environment 605 may be performed in a background. In an embodiment, the processor 120 may be in a state of continuously performing the analysis of the environment 605 and/or the environment 606 provided to the user 510 before the environment 605. For example, analyzing the environment 605 and/or the environment 606 provided to the user 510 before the environment 605 may mean identifying one or more objects in an image, obtained through the first camera 481, representing the environment 605 and/or the environment 606 provided to the user 510 before the environment 605. For example, analyzing the environment 605 and/or the environment 606 provided to the user 510 before the environment 605 may mean identifying the one or more objects in the image, obtained through the first camera 481, representing the environment 605 and/or the environment 606 provided to the user 510 before the environment 605 while augmented reality (AR) and/or mixed reality (MR) is provided to the user 510. However, it is not limited thereto. For example, analyzing the environment 605 and/or the environment 606 provided to the user 510 before the environment 605 may mean identifying the one or more objects in the image, displayed through a display 460, 250, 250-1, 250-2, 350-1, or 350-2, representing the environment 605 and/or the environment 606 provided to the user 510 before the environment 605. For example, analyzing the environment 605 and/or the environment 606 provided to the user 510 before the environment 605 may mean identifying the one or more objects in the image, displayed through a display 460, 250-1, 250-2, 350-1, or 350-2, representing the environment 605 and/or the environment 606 provided to the user 510 before the environment 605 while virtual reality (VR) and/or mixed reality (MR) is provided to the user 510. For example, the environment 606 may be different from the environment 605. For example, the environment 606 being different from the environment 605 may mean that a space (e.g., a kitchen) of the environment 606 is different from a space (e.g., a living room) of the environment 605. For example, the environment 606 being different from the environment 605 may mean that fields of view of the user 510 are different in the same space (e.g., the living room). For example, the environment 606 may be an environment provided to the user 510 when viewing a first direction in the same space (e.g., the living room), and the environment 605 may be an environment provided to the user 510 when viewing a second direction different from the first direction in the same space (e.g., the living room). However, it is not limited thereto.

In an embodiment, based on analyzing the environment 605, the processor 120 may determine whether an object that may be brightly expressed in the environment 605 exists. In an embodiment, in a case that it is determined that the user authentication based on the iris recognition is not possible, the processor 120 may determine whether the object that may be brightly expressed in the analyzed environment 605 exists. In an embodiment, the processor 120 may determine whether the object that may be brightly expressed in the analyzed environment 605 exists, in order to perform the operation for increasing the size of the iris of the eye of the user 510. In an embodiment, in a case that the iris recognition using an image for the iris recognition fails, the processor 120 may determine whether the object that may be brightly expressed in the analyzed environment 605 exists. In an embodiment, in a case that the iris recognition using the image for the iris recognition fails before performing the operation for increasing the size of the iris of the eye of the user 510, the processor 120 may determine whether the object that may be brightly expressed in the analyzed environment 605 exists.

In an embodiment, based on analyzing the previous environment 606, the processor 120 may determine whether an object that may be brightly expressed in the previous environment 606 exists. In an embodiment, in a case that it is determined that the user authentication based on the iris recognition is not possible, the processor 120 may determine whether the object that may be brightly expressed in the analyzed environment 606 exists. In an embodiment, the processor 120 may determine whether the object that may be brightly expressed in the analyzed environment 606 exists, in order to perform the operation for increasing the size of the iris of the eye of the user 510. In an embodiment, in a case that the iris recognition using an image for the iris recognition fails, the processor 120 may determine whether the object that may be brightly expressed in the analyzed environment 606 exists. In an embodiment, in a case that the iris recognition using the image for the iris recognition fails before performing the operation for increasing the size of the iris of the eye of the user 510, the processor 120 may determine whether the object that may be brightly expressed in the analyzed environment 606 exists.

In an embodiment, the processor 120 may display an image object 622 guiding movement of the user 510. In an embodiment, the processor 120 may display the image object 622 based on analyzing the environment 605 and/or the environment 606. In an embodiment, the processor 120 may display the image object 622 based on a location of the environment 606. For example, the processor 120 may display the image object 622 guiding the movement of the user 510 from the environment 605 to the environment 606.

Referring to FIG. 6D, the processor 120 may display the image object 622 indicating a door that allows movement to the environment 606. However, it is not limited thereto.

In an embodiment, the processor 120 may select (and/or identify) one environment 606 from among one or more previous environments movable in the environment 605. In an embodiment, the processor 120 may display the image object 622 guiding the movement of the user 510 based on the selected environment 606.

In an embodiment, the processor 120 may display the image object 622 guiding the movement of the user 510 to the environment 606 adjacent to the user 510 from among the one or more previous environments movable in the environment 605. Herein, the environment 606 being adjacent to the user 510 may mean that the environment 606 is located within a specified distance from the user 510.

In an embodiment, the processor 120 may identify and/or track movement of the user 510 and/or movement of the gaze 521.

For example, the processor 120 may identify the movement of the user 510 through a sensor (e.g., the sensor module 176 of FIG. 1). For example, the processor 120 may identify the movement of the user 510 through an inertial sensor. For example, the processor 120 may identify the movement of the user 510 and/or the movement of the gaze 521 based on images obtained from the third camera 489. In an embodiment, the processor 120 may identify and/or track the movement of the user 510 and/or the movement of the gaze 521 after displaying the image object 622. In an embodiment, the processor 120 may identify that the user 510 is moved to the environment 606. In an embodiment, the processor 120 may identify that the user 510 is moved to the environment 606 indicated by the image object 622.

In an embodiment, the processor 120 may adjust (e.g., increase) brightness of the at least one area 615 and/or 616. In an embodiment, in response to the user 510 being moved to the environment 606 indicated by the image object 622, the processor 120 may adjust (e.g., increase) the brightness of the at least one area 615 and/or 616. As the brightness of the at least one area 615 and/or 616 in the environment 606 is adjusted (e.g., increased), the size of the iris of the eye of the user 510 may be increased. Herein, adjusting (e.g., increasing) brightness may mean adjusting transparency of a transparent or translucent lens included in the at least one display 250 in the wearable device 200 of FIGS. 2A and/or 2B to be transparent. For example, adjusting (e.g., increasing) brightness may mean increasing brightness of an area displayed through the at least one display 250 in the wearable device 200 of FIGS. 2A and/or 2B. For example, adjusting (e.g., increasing) brightness may mean increasing brightness of an area displayed through the at least one display 350-1 and/or 350-2 in the wearable device 300 of FIGS. 3A and/or 3B. For example, adjusting (e.g., increasing) brightness may mean superimposing a transparent and/or translucent layer on the image displayed through the at least one display 350-1 and/or 350-2 to provide augmented reality (AR), virtual reality (VR), or mixed reality (MR). Herein, the transparent and/or translucent layer may have brightness greater than or equal to specified brightness in the area selected from the image. In the layer, another area other than the area selected from the image may be transparent. In the layer, the area selected from the image may have the brightness greater than or equal to the specified brightness.

In an embodiment, the processor 120 may obtain an eye image through the second camera 485. In an embodiment, the processor 120 may obtain an image for the iris recognition through the second camera 485.

In an embodiment, the processor 120 may obtain the image for the iris recognition while brightness of the environment 606 is adjusted. In an embodiment, the processor 120 may obtain the image for the iris recognition while the brightness of the at least one area 615 and/or 616 in the environment 606 is adjusted. In an embodiment, the processor 120 may obtain the image for the iris recognition while the brightness of the at least one area 615 and/or 616 of the user 510 in the environment 606 is adjusted.

In an embodiment, the processor 120 may authenticate the user 510 based on an iris included in the image for the iris recognition. In an embodiment, the processor 120 may authenticate the user 510 based on the iris included in the image for the iris recognition obtained while the brightness of the at least one area 615 and/or 616 is adjusted.

As described above, when adjusting brightness for the iris recognition, the electronic device 401 may reduce inconvenience (e.g., glare) to the user 510 by optimizing an intensity of light for the iris recognition. When adjusting the brightness for the iris recognition, the electronic device 401 may relatively less increase light of an environment provided to the user 510, by inducing the user 510 to the environment 606 in which the object that may be brightly expressed exists.

In FIG. 6D, it is exemplified that the electronic device 401 guides movement of the user to an area that may be brightly expressed in a previous field of view (or environment), but this is merely an example. According to an embodiment, the electronic device 401 may guide the movement of the field of view of the user in the same space without spatial movement of the user.

In an embodiment, the processor 120 may analyze the environment 605. In an embodiment, the analysis of the environment 605 may be performed in a background. In an embodiment, the processor 120 may be in a state in which the analysis of the environment 605 is being continuously performed. For example, analyzing the environment 605 may mean identifying one or more objects in an image representing the environment 605 obtained through the first camera 481. For example, analyzing the environment 605 may mean identifying the one or more objects in the image representing the environment 605 obtained through the first camera 481 while augmented reality (AR) and/or mixed reality (MR) is provided to the user 510. However, it is not limited thereto. For example, analyzing the environment 605 may mean identifying the one or more objects in the image representing the environment 605 displayed through a display 460, 250, 250-1, 250-2, 350-1, or 350-2.

In an embodiment, based on analyzing the environment 605, the processor 120 may determine whether the object that may be brightly expressed in the environment 605 exists. In an embodiment, in a case that it is determined that the user authentication based on the iris recognition is not possible, the processor 120 may determine whether the object that may be brightly expressed in the analyzed environment 605 exists. In an embodiment, the processor 120 may determine whether the object that may be brightly expressed in the analyzed environment 605 exists, in order to perform the operation for increasing the size of the iris of the eye of the user 510. In an embodiment, in a case that the iris recognition using the image for the iris recognition fails, the processor 120 may determine whether the object that may be brightly expressed in the analyzed environment 605 exists. In an embodiment, in a case that the iris recognition using the image for the iris recognition fails before performing the operation for increasing the size of the iris of the eye of the user 510, the processor 120 may determine whether the object that may be brightly expressed in the analyzed environment 605 exists.

In an embodiment, the processor 120 may analyze another environment provided to the user 510 in the same space as the environment 605. In an embodiment, the processor 120 may analyze the another environment to perform the operation for increasing the size of the iris of the eye of the user 510. Herein, the another environment different from the environment 605 may be an environment that may be provided to the user 510 according to a change in the field of view (or rotation of the field of view) of the user 510 with respect to the environment 605. For example, the another environment different from the environment 605 may be an environment that may be provided to the user 510 when a location of a face when facing the environment 605 is rotated to a right or a left. The another environment different from the environment 605 may mean that fields of view of the user 510 are different in the same space (e.g., the living room). For example, the another environment different from the environment 605 may be an environment provided to the user 510 when viewing the first direction in the same space (e.g., the living room), and the another environment different from the environment 605 may be an environment provided to the user 510 when viewing the second direction different from the first direction in the same space (e.g., the living room). However, it is not limited thereto.

In an embodiment, based on analyzing the another environment different from the environment 605, the processor 120 may determine whether an object that may be brightly expressed in the another environment different from the environment 605 exists.

In an embodiment, the processor 120 may display an image object guiding movement of the field of view of the user 510. In an embodiment, the processor 120 may display the image object based on analyzing the environment 605 and/or the another environment different from the environment 605. In an embodiment, the processor 120 may display the image object based on a location of the another environment different from the environment 605. For example, the processor 120 may display the image object guiding the movement of the field of view of the user 510 from the environment to the another environment different from the environment 605.

In an embodiment, the processor 120 may select (and/or identify) one other environment from among one or more other environments movable in the environment. In an embodiment, the processor 120 may display an image object guiding movement of the field of view of the user 510 based on the selected other environment.

In an embodiment, the processor 120 may identify and/or track the movement of the field of view of the user 510.

For example, the processor 120 may identify the movement of the field of view of the user 510 through a sensor (e.g., the sensor module 176 of FIG. 1). For example, the processor 120 may identify the movement of the field of view of the user 510 through an inertial sensor. For example, the processor 120 may identify the movement of the field of view of the user 510 based on images obtained from the third camera 489.

In an embodiment, the processor 120 may adjust (e.g., increase) brightness of at least one area selected in the another environment in which the field of view of the user 510 is moved. In an embodiment, the processor 120 may obtain an image for the iris recognition while the brightness of the at least one area selected in the another environment is adjusted. In an embodiment, the processor 120 may authenticate the user 510 based on an iris included in the image for the iris recognition.

As described above, when adjusting brightness for the iris recognition, the electronic device 401 may reduce inconvenience (e.g., glare) to the user 510 by optimizing an intensity of light for the iris recognition. When adjusting the brightness for the iris recognition, the electronic device 401 may relatively less increase light of an environment provided to the user 510, by inducing the user 510 to the another environment of the field of view in which the object that may be brightly expressed exists.

Hereinafter, an operation in which the electronic device 401 superimposes an image object on an area that may be brightly expressed in the field of view will be described.

FIG. 6E illustrates an example of an environment which is shown to a user according to an embodiment.

FIG. 6E may be described with reference to FIGS. 1, 2A, 2B, 3A, 3B, 4, and 5. Hereinafter, a first camera 481 may be a camera photographing an environment which is shown to a user 510 (or a field of view (FOV) of the user), a second camera 485 may be a camera for iris recognition, and a third camera 489 may be a gaze tracking camera.

FIG. 6E exemplifies an environment 607 which is shown to the user 510 (or the field of view of the user) in a state in which the user 510 wears an electronic device 401. The environment 607 of FIG. 6E may be shown to the user 510 after the environment 501 of FIG. 5 is shown to the user 510. Hereinafter, the environment which is shown to the user (or the field of view of the user) may be referred to as an environment.

In an embodiment, a processor 120 may perform an operation for increasing a size of an iris of an eye of the user 510. In an embodiment, in a case that user authentication based on iris recognition fails due to insufficient brightness of an area where a gaze 521 of the user 510 is located, the processor 120 may perform the operation for increasing the size of the iris of the eye of the user 510.

In an embodiment, the processor 120 may analyze the environment 607. In an embodiment, the analysis of the environment 607 may be performed in a background. In an embodiment, the processor 120 may be in a state in which the analysis of the environment 607 is being continuously performed. For example, analyzing the environment 607 may mean identifying one or more objects in an image representing the environment 607 displayed through a display 460, 250, 250-1, 250-2, 350-1, or 350-2. For example, analyzing the environment 607 may mean identifying the one or more objects in the image representing the environment 607 displayed through the display 460, 250, 250-1, 250-2, 350-1, or 350-2 while virtual reality (VR) and/or mixed reality (MR) is provided to the user 510.

In an embodiment, the processor 120 may select at least one area 623 and/or 624 in the environment 607. In an embodiment, the processor 120 may select the at least one area 623 and/or 624 based on analyzing the environment 607. In an embodiment, in a case that it is determined that user authentication based on iris recognition is not possible, the processor 120 may select the at least one area 623 and/or 624 in the environment 607. In an embodiment, the processor 120 may select the at least one area 623 and/or 624 in the environment 607, in order to perform the operation for increasing the size of the iris of the eye of the user 510. In an embodiment, in a case that iris recognition using an image for the iris recognition fails, the processor 120 may select the at least one area 623 and/or 624 in the environment 607. In an embodiment, in a case that the iris recognition using the image for the iris recognition fails before performing the operation for increasing the size of the iris of the eye of the user 510, the processor 120 may select the at least one area 623 and/or 624 in the environment 607.

In an embodiment, the processor 120 may select the at least one area 623 and/or 624 of at least one object that may superimpose with a visual object in the environment 607. In an embodiment, the processor 120 may identify the at least one area 623 and/or 624 of the at least one object. For example, the at least one object that may superimpose with the visual object may include furniture (e.g., a sofa, a table, or a bed), an appliance (e.g., a TV, a washing machine, or a refrigerator), a structure (e.g., a wall, a pillar, a ceiling, or a floor), and/or another object (e.g., a toy, a bag, a wallet, or an electronic device).

Referring to FIG. 6E, the processor 120 may select the area 623 including a sofa in the environment 607. In an embodiment, the processor 120 may select the area 624 including a table in the environment 607. However, it is not limited thereto.

In an embodiment, the processor 120 may select (and/or identify) at least one object from among one or more objects that may superimpose with a visual object in the environment 607. In an embodiment, the processor 120 may select (and/or identify) the at least one area 623 and/or 624 based on the selected at least one object. For example, the processor 120 may select (and/or identify) at least one object among a sofa or a table and select (and/or identify) the at least one area 623 and/or 624 corresponding to the selected object.

In an embodiment, the processor 120 may select (and/or identify) at least one object adjacent to the gaze 521 of the user 510 from among the one or more objects that may superimpose with a visual object in the environment 607. Herein, the at least one object being adjacent to the gaze 521 may mean that the at least one object is located within a specified distance from the gaze 521. However, it is not limited thereto.

In an embodiment, the processor 120 may select (and/or identify) the specified number of objects from among the one or more objects that may superimpose with a visual object in the environment 607. Herein, the specified number may be the number of objects required to increase the size of the iris of the user 510. The specified number may be changed according to brightness of the environment 607. For example, the specified number in a case that the environment 607 is bright may be less than the specified number in a case that the environment 607 is dark.

In an embodiment, the processor 120 may superimpose (or overlay) a visual object on the selected at least one area 623 and/or 624. For example, the processor 120 may generate a visual object having a shape corresponding to the selected at least one object, and superimpose (or overlay) the generated visual object on the selected at least one area 623 and/or 624. In an embodiment, the processor 120 may superimpose (or overlay) a layer including a visual object above an image including the selected at least one area 623 and/or 624. In an embodiment, the processor 120 may superimpose (or overlay) a layer including a visual object corresponding to the selected at least one object above the image including the selected at least one area 623 and/or 624. The visual object corresponding to the selected at least one object may mean that a size, a shape, and a relative location in the layer of the visual object correspond to a size, a shape, and a relative location in the image of the selected at least one object. For example, the generated visual object may be brighter than an original object in the environment 607. Herein, superimposing (or overlaying) a visual object may mean displaying a visual object through the at least one display 250 in the wearable device 200 of FIGS. 2A and/or 2B. For example, superimposing (or overlaying) a visual object may mean displaying a visual object through the at least one display 350-1 and/or 350-2 in the wearable device 300 of FIGS. 3A and 3B. For example, adjusting (e.g., increasing) brightness may mean superimposing a transparent and/or translucent layer on an image displayed through the at least one display 350-1 and/or 350-2 to provide augmented reality (AR), virtual reality (VR), or mixed reality (MR). Herein, the transparent and/or translucent layer may have brightness greater than or equal to specified brightness in an area selected from the image. In the layer, another area other than the area selected from the image may be transparent. In the layer, the area selected from the image may have the brightness greater than or equal to the specified brightness.

In an embodiment, as the visual object is superimposed (or overlaid) on the selected at least one area 623 and/or 624, the brightness of the environment 607 may be adjusted (or increased).

In an embodiment, the processor 120 may obtain an eye image through the second camera 485. In an embodiment, the processor 120 may obtain an image for the iris recognition through the second camera 485.

In an embodiment, the processor 120 may obtain the image for the iris recognition while the visual object is superimposed (or overlaid) on the selected at least one area 623 and/or 624. In an embodiment, the processor 120 may obtain the image for the iris recognition while the brightness of the environment 607 is adjusted.

In an embodiment, the processor 120 may authenticate the user 510 based on an iris included in the image for the iris recognition. In an embodiment, the processor 120 may authenticate the user 510 based on the iris included in the image for the iris recognition obtained while the brightness of the at least one area 623 and/or 624 is adjusted.

As described above, when adjusting brightness for the iris recognition, the electronic device 401 may reduce inconvenience (e.g., glare) to the user 510 by optimizing an intensity of light for the iris recognition. When adjusting the brightness for the iris recognition, the electronic device 401 may provide the user 510 with the environment 607 in which the brightness is naturally adjusted (or minimize a sense of heterogeneity of the user 510), by superimposing an image object that is brighter than an object located in the environment 607.

Hereinafter, an operation in which the electronic device 401 is changed to a see-through environment will be described.

FIG. 6F illustrates an example of an environment which is shown to a user according to an embodiment.

FIG. 6F may be described with reference to FIGS. 1, 2A, 2B, 3A, 3B, 4, and 5.

FIG. 6F exemplifies environments 608 and 609 shown to a user 510 (or a field of view of the user) in a state in which the user 510 wears an electronic device 401. The environments 608 and 609 of FIG. 6F may be shown to the user 510 before the environment 501 of FIG. 5 is shown to the user 510. The environment 609 of FIG. 6F may be shown to the user 510 after the environment 608 of FIG. 6F is shown to the user 510. The environment 501 of FIG. 5 may be shown to the user 510 after the environment 609 of FIG. 6F is shown to the user 510. Hereinafter, the environment which is shown to the user (or the field of view of the user) may be referred to as an environment.

The environment 608 of FIG. 6F may be an environment providing virtual reality (VR) or mixed reality (MR) to the user 510 in a state in which the user 510 wears the electronic device 401. The environment 608 of FIG. 6F may be an environment in which a virtual environment distinct from an external environment (or not reflecting the external environment) rendered through a processor 120 is provided to the user 510 through a display 460, 250, 250-1, 250-2, 350-1, or 350-2.

In an embodiment, the processor 120 may perform an operation for increasing a size of an iris of an eye of the user 510. In an embodiment, in a case that user authentication based on iris recognition fails due to insufficient brightness of an area where a gaze 521 of the user 510 is located, the processor 120 may perform the operation for increasing the size of the iris of the eye of the user 510.

In an embodiment, the processor 120 may identify and/or track the gaze 521 of the user 510. For example, the processor 120 may identify the gaze 521 of the user 510 based on images obtained from a third camera 489 for eye tracking (ET). For example, the images obtained from the third camera 489 may be a glint image. For example, the processor 120 may identify the gaze 521 of the user 510 based on a location of an eye included in the images obtained from the third camera 489. For example, the processor 120 may identify the gaze 521 of the user 510 based on a location of an iris included in the images obtained from the third camera 489. For example, the processor 120 may identify the gaze 521 of the user 510 by tracking the location of the iris. However, it is not limited thereto.

In an embodiment, the processor 120 may obtain an authentication request from the user 510. For example, the processor 120 may obtain the authentication request based on the iris recognition. For example, the processor 120 may obtain the authentication request while the environment 608 is provided to the user 510. For example, the processor 120 may obtain the authentication request based on iris recognition generated by a program 140 while the program 140 is being executed.

In an embodiment, in response to the authentication request of the user 510, the processor 120 may determine whether the user authentication based on the iris recognition is possible. In an embodiment, in response to the authentication request based on the iris of the user 510, the processor 120 may determine whether the iris recognition is possible. In an embodiment, based on the size of the iris of the eye of the user 510, the processor 120 may determine whether the user authentication based on the iris recognition is possible.

In an embodiment, in a case that it is determined that the user authentication based on the iris recognition is possible, the processor 120 may authenticate the user based on the iris recognition using an image obtained through a second camera 485. In an embodiment, in a case that it is determined that the user authentication based on the iris recognition is possible, the processor 120 may authenticate the user based on the iris recognition using an image for the iris recognition while providing the virtual reality (VR) or the mixed reality (MR) through the environment 608. In an embodiment, in a case that the iris recognition using the image for the iris recognition fails while providing the virtual reality (VR) or the mixed reality (MR) through the environment 608, the processor 120 may perform the operation for increasing the size of the iris of the eye of the user 510.

In an embodiment, in a case that it is determined that the user authentication based on the iris recognition is not possible, the processor 120 may perform the operation for increasing the size of the iris of the eye of the user 510. In an embodiment, in a case that the iris recognition using the image for the iris recognition fails, the processor 120 may perform the operation for increasing the size of the iris of the eye of the user 510.

In an embodiment, the processor 120 may determine whether switching to another environment (or an external environment) distinct from the environment 608 is necessary. For example, based on analyzing the environment 608, the processor 120 may determine whether switching to the another environment (or the external environment) is necessary. For example, based on analyzing the another environment (or the external environment), the processor 120 may determine whether switching to the another environment (or the external environment) is necessary. In an embodiment, the processor 120 may determine whether switching to the another environment (or the external environment) is necessary, in order to perform the operation for increasing the size of the iris of the eye of the user 510. In an embodiment, in a case that the user authentication based on the iris recognition fails due to insufficient brightness of an area where the gaze 521 of the user 510 is located, the processor 120 may determine whether switching to the another environment (or the external environment) is necessary, in order to perform the operation for increasing the size of the iris of the eye of the user 510.

In an embodiment, the processor 120 may analyze the environment 608. In an embodiment, the analysis of the environment 608 may be performed in a background. In an embodiment, the processor 120 may be in a state in which the analysis of the environment 608 is being continuously performed. For example, analyzing the environment 608 may mean identifying one or more objects in an image representing the environment 608 displayed through the display 460, 250, 250-1, 250-2, 350-1, or 350-2. For example, analyzing the environment 608 may mean identifying the one or more objects in the image representing the environment 608 displayed through the display 460, 250, 250-1, 250-2, 350-1, or 350-2 while augmented reality (AR) and/or mixed reality (MR) is provided to the user 510.

In an embodiment, based on analyzing the environment 608, the processor 120 may determine whether brightness of at least one area in the environment 608 is capable of being adjusted. For example, the processor 120 may determine whether brightness of an area including the gaze 521 in the environment 608 is capable of being adjusted. For example, the processor 120 may determine whether an object that may be brightly expressed in the environment 608 exists.

In an embodiment, based on analyzing the another environment (or the external environment) distinct from the environment 608, the processor 120 may determine whether brightness of at least one area in the another environment is capable of being adjusted. In an embodiment, based on analyzing the another environment (or the external environment) distinct from the environment 608, the processor 120 may determine whether brightness of the another environment is greater than or equal to specified brightness. For example, the another environment may include an external environment photographed through a first camera 481.

In an embodiment, in a case that it is determined that brightness of at least one area in the environment 608 is capable of being adjusted, the processor 120 may perform the iris recognition while providing the environment 608 to the user 510. In an embodiment, in a case that it is determined that the brightness of the at least one area in the environment 608 is capable of being adjusted, the processor 120 may perform the iris recognition while adjusting the brightness of the at least one area in the environment 608.

In an embodiment, in a case that it is determined that the brightness of the at least one area in the environment 608 is not capable of being adjusted, the processor 120 may determine to switch from the environment 608 to the another environment. In an embodiment, in a case that it is determined that brightness of the at least one area in the another environment is capable of being adjusted, the processor 120 may determine switching from the environment 608 to the another environment. In an embodiment, in a case that it is determined that the brightness of the another environment is greater than or equal to the specified brightness, the processor 120 may determine switching from the environment 608 to the another environment.

In an embodiment, the processor 120 may display a text object 625 notifying that a screen is switched in the environment 609. In an embodiment, in a case that switching from the environment 608 to the another environment is determined, the processor 120 may display the text object 625 notifying that the screen is switched. In an embodiment, in a case that switching from the environment 608 to the another environment is determined, the processor 120 may display the text object 625 notifying that the screen is switched from the environment 609 to the environment 501.

In an embodiment, the processor 120 may provide the environment 501 to the user 510 after displaying the text object 625. In an embodiment, the processor 120 may determine whether the user authentication based on the iris recognition is possible after switching from the environment 609 to the environment 501. In an embodiment, the processor 120 may determine whether the user authentication based on the iris recognition is possible while providing the environment 501 to the user 510.

In an embodiment, in a case that it is determined that the user authentication based on the iris recognition is possible after switching from the environment 609 to the environment 501, the processor 120 may authenticate the user based on the iris recognition using the image obtained through the second camera 485. In an embodiment, in a case that it is determined that the user authentication based on the iris recognition is not possible, the processor 120 may perform the operation for increasing the size of the iris of the eye of the user 510. In an embodiment, in a case that the iris recognition using the image for the iris recognition fails, the processor 120 may perform the operation for increasing the size of the iris of the eye of the user 510.

Hereinafter, an operation in which the electronic device 401 guides movement of the gaze of the user in a direction of the second camera 485 will be described.

FIG. 7 illustrates an example of an environment which is shown to a user according to an embodiment.

FIG. 7 may be described with reference to FIGS. 1, 2A, 2B, 3A, 3B, 4, and 5. Hereinafter, a first camera 481 may be a camera photographing an environment which is shown to a user 510 (or a field of view (FOV) of the user), a second camera 485 may be a camera for iris recognition, and a third camera 489 may be a gaze tracking camera.

FIG. 7 exemplifies an environment 701 which is shown to the user 510 (or the field of view of the user) in a state in which the user 510 wears an electronic device 401. The environment 701 of FIG. 7 may be shown to the user 510 after the environment 501 of FIG. 5 is shown to the user 510. Hereinafter, the environment which is shown to the user (or the field of view of the user) may be referred to as an environment.

In an embodiment, a processor 120 may perform an operation for increasing a size of an iris of an eye of the user 510. In an embodiment, in a case that user authentication based on iris recognition fails due to insufficient brightness of an area where a gaze 521 of the user 510 is located, the processor 120 may perform the operation for increasing the size of the iris of the eye of the user 510.

In an embodiment, the processor 120 may display image objects 721 and 722 guiding movement of the gaze 521 of the user 510. In an embodiment, the processor 120 may display the image objects 721 and 722 guiding movement of the gaze 521 of the user 510 to areas 711 and 712 where the second camera 485 is located. In an embodiment, the processor 120 may display the image objects 721 and 722 guiding the movement of the gaze 521 of the user 510 to the areas 711 and 712 adjacent to a bright area from among one or more areas where the second camera 485 is located. For example, the processor 120 may display the image object 721 guiding movement of the gaze 521 of the user 510 to the area 711 adjacent to a bright area from among the one or more areas 711 and 712 where the second camera 485 is located.

In an embodiment, the processor 120 may identify and/or track the gaze 521 of the user 510. For example, the processor 120 may identify the gaze 521 of the user 510 based on images obtained from the third camera 489. In an embodiment, the processor 120 may identify and/or track the gaze 521 of the user 510 after displaying the image objects 721 and 722. In an embodiment, the processor 120 may identify that the gaze 521 is moved to the areas 711 and 712 where the second camera 485 is located. In an embodiment, the processor 120 may identify that the gaze 521 is moved in a direction (and/or a location) indicated by the image objects 721 and 722.

In an embodiment, the processor 120 may obtain an eye image through the second camera 485. In an embodiment, the processor 120 may obtain an image for the iris recognition through the second camera 485. In an embodiment, the processor 120 may authenticate the user 510 based on an iris included in the image for the iris recognition.

According to an embodiment, the processor 120 may increase brightness of the areas 711 and 712 guided by the image objects 721 and 722. In an embodiment, the processor 120 may obtain the eye image through the second camera 485 while the brightness of the areas 711 and 712 is increased.

As described above, when adjusting brightness for the iris recognition, the electronic device 401 may reduce inconvenience (e.g., glare) to the user 510 by optimizing an intensity of light for the iris recognition. When obtaining the eye image for the iris recognition, the electronic device 401 may obtain the eye image, which is clearer (or looking at the second camera 485), by directing the gaze 521 of the user 510 to the second camera 485.

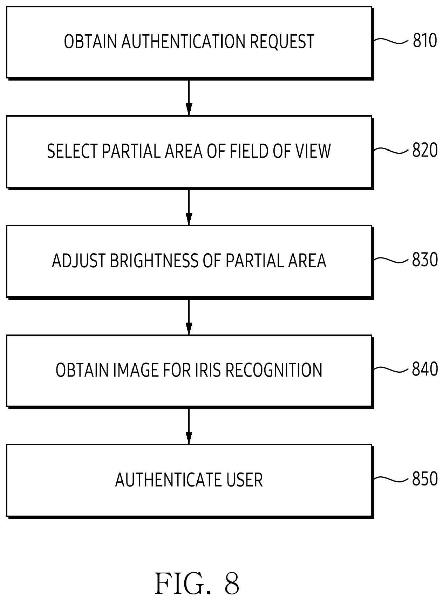

FIG. 8 is a flowchart representing an operation of an electronic device according to an embodiment.

FIG. 8 may be described with reference to FIGS. 1, 2A, 2B, 3A, 3B, 4, 5, 6A, 6B, 6C, 6D, 6E, and 6F.

Referring to FIG. 8, in operation 810, a processor 120 may obtain an authentication request. For example, the processor 120 may obtain the authentication request based on iris recognition. For example, the processor 120 may obtain the authentication request while an environment 501 is provided to a user 510. For example, the processor 120 may obtain the authentication request based on iris recognition generated by a program 140 while the program 140 is being executed. The processor 120 may obtain the authentication request based on the iris recognition while providing augmented reality (AR), virtual reality (VR), or mixed reality (MR) to the user 510.

In operation 820, the processor 120 may select a partial area of a field of view. In an embodiment, the processor 120 may select an area 611 where a gaze 521 of the user is located in the field of view (or an environment 601). In an embodiment, the processor 120 may select at least one area 612, 613, and/or 614 of at least one object that may be brightly expressed in the field of view (or an environment 602). In an embodiment, the processor 120 may select the at least one relatively bright area 612, 613, and/or 614 and at least one relatively dark area in the field of view (or the environment 602).

In operation 830, the processor 120 may adjust brightness of the partial area.

In an embodiment, the processor 120 may adjust brightness of the area 611 where the gaze 521 of the user is located in the field of view (or the environment 601). For example, the processor 120 may increase the brightness of the area 611 where the gaze 521 of the user is located in the field of view (or the environment 601).

In an embodiment, the processor 120 may adjust brightness of the at least one area 612, 613, and/or 614 of the at least one object that may be brightly expressed in the field of view (or the environment 602). In an embodiment, the processor 120 may increase the brightness of the at least one area 612, 613, and/or 614 of the at least one object that may be brightly expressed in the field of view (or the environment 602).

In an embodiment, the processor 120 may adjust brightness of the at least one relatively bright area 612, 613, and/or 614 and the at least one relatively dark area in the field of view (or the environment 602). In an embodiment, the processor 120 may reduce the brightness of the at least one relatively bright area 612, 613, and/or 614 and may increase the brightness of the at least one relatively dark area in the field of view (or the environment 602).

In operation 840, the processor 120 may obtain an image for the iris recognition. In an embodiment, the processor 120 may obtain an eye image through a second camera 485. In an embodiment, the processor 120 may obtain the image for the iris recognition through the second camera 485.

In operation 850, the processor 120 may authenticate the user. In an embodiment, the processor 120 may authenticate the user 510 based on an iris included in the image for the iris recognition. In an embodiment, the processor 120 may authenticate the user 510 based on the iris included in the image for the iris recognition obtained while the brightness of the partial area is adjusted.

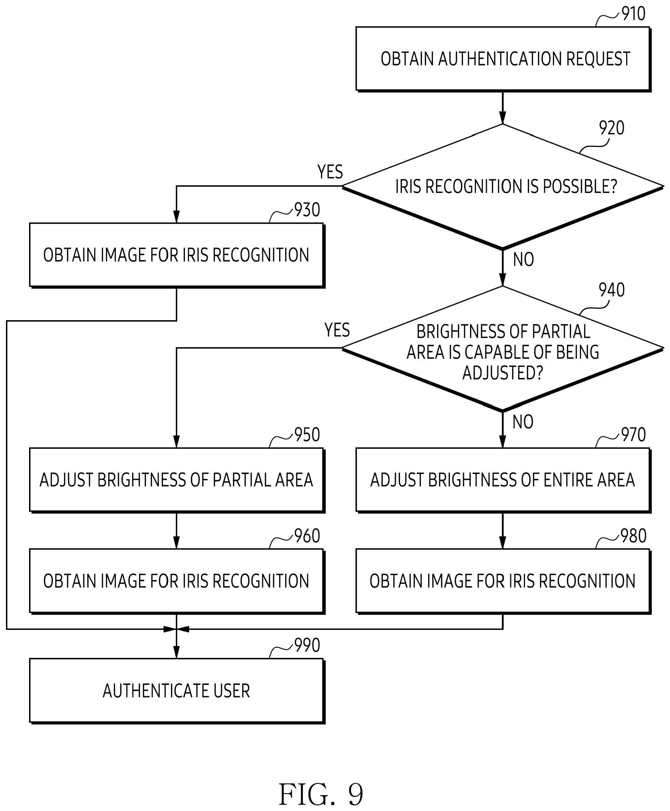

FIG. 9 is a flowchart representing an operation of an electronic device according to an embodiment.

FIG. 9 may be described with reference to FIGS. 1, 2A, 2B, 3A, 3B, 4, 5, 6A, 6B, 6C, 6D, 6E, and 6F.

Referring to FIG. 9, in operation 910, a processor 120 may obtain an authentication request. For example, the processor 120 may obtain the authentication request based on iris recognition. For example, the processor 120 may obtain the authentication request while an environment 501 is provided to a user 510. For example, the processor 120 may obtain the authentication request based on iris recognition generated by a program 140 while the program 140 is being executed. The processor 120 may obtain the authentication request based on the iris recognition while providing augmented reality (AR), virtual reality (VR), or mixed reality (MR) to the user 510.

In operation 920, the processor 120 may determine whether the iris recognition is possible. In an embodiment, in response to the authentication request of the user 510, the processor 120 may determine whether the iris recognition is possible. In an embodiment, in response to the authentication request based on an iris of the user 510, the processor 120 may determine whether the iris recognition is possible.

In an embodiment, based on a size of the iris of an eye of the user 510, the processor 120 may determine whether the iris recognition is possible. For example, the processor 120 may identify the size of the iris based on an eye image of the user 510 obtained through a second camera 485. Based on the size of the iris identified based on the eye image, the processor 120 may determine whether the iris recognition is possible. For example, in a case that the size of the iris is greater than a specified first size, it may be determined that the iris recognition is possible. For example, in a case that the size of the iris is less than or equal to the specified first size, it may be determined that the iris recognition is not possible. Based on a second size of a pupil identified based on the eye image, the processor 120 may determine whether the iris recognition is possible. For example, in a case that the second size of the pupil is less than or equal to a specified second size, it may be determined that the iris recognition is possible. For example, in a case that the second size of the pupil is greater than the specified second size, it may be determined that the iris recognition is not possible. For example, the specified first size and/or the specified second size may be preset.

In the operation 920, in a case that it is determined that the iris recognition is possible, the processor 120 may perform operation 930. In the operation 920, in a case that it is determined that the iris recognition is not possible, the processor 120 may perform operation 940.

In the operation 930, the processor 120 may obtain an image for the iris recognition. In an embodiment, in a case that it is determined that user authentication based on the iris recognition is possible, the processor 120 may obtain the image through the second camera 485.

In the operation 940, the processor 120 may determine whether brightness of a partial area is capable of being adjusted. The processor 120 may determine whether at least one object of which brightness is capable of being adjusted exists in a field of view (or an environment) of the user 510. For example, the processor 120 may determine whether brightness of an area including a gaze 521 in the environment 501 is capable of being adjusted. For example, the processor 120 may determine whether an object that may be brightly expressed in the environment 501 exists.

In an embodiment, in a case that the at least one object of which brightness is capable of being adjusted exists in the field of view (or the environment) of the user 510, the processor 120 may determine that the brightness of the partial area is capable of being adjusted. In an embodiment, in a case that the brightness of the area including the gaze 521 in the environment 501 is capable of being adjusted, the processor 120 may determine that the brightness of the partial area is capable of being adjusted. In an embodiment, in a case that an object that may be brightly expressed in the environment 501 exists, the processor 120 may determine that the brightness of the partial area is capable of being adjusted.

In an embodiment, in a case that the at least one object of which brightness is capable of being adjusted does not exist in the field of view (or the environment) of the user 510, the processor 120 may determine that the brightness of the partial area is capable of being adjusted. In an embodiment, in a case that the brightness of the area including the gaze 521 in the environment 501 is not capable of being adjusted, the processor 120 may determine that the brightness of the partial area is capable of being adjusted. In an embodiment, in a case that the object that may be brightly expressed in the environment 501 does not exist, the processor 120 may determine that the brightness of the partial area is capable of being adjusted.

In the operation 940, in a case that it is determined that the brightness of the partial area is capable of being adjusted, the processor 120 may perform operation 950. In the operation 940, in a case that it is determined that the brightness of the partial area is not capable of being adjusted, the processor 120 may perform operation 970.

In the operation 950, the processor 120 may adjust the brightness of the partial area. In an embodiment, the processor 120 may adjust brightness of an area 611 where the gaze 521 of the user is located in an environment 601. In an embodiment, the processor 120 may adjust brightness of at least one area 612, 613, and/or 614 of at least one object that may be brightly expressed in an environment 602. The processor 120 may superimpose (or overlay) a relatively bright visual object on at least one area 623 and/or 624 in an environment 607.

In operation 960, the processor 120 may obtain the image for the iris recognition. In an embodiment, the processor 120 may obtain the image for the iris recognition while the brightness of the area 611 where the gaze 521 of the user 510 is located in the environment 601 is adjusted. In an embodiment, the processor 120 may obtain the image for the iris recognition while the brightness of the at least one area 612, 613, and/or 614 of the at least one object that may be brightly expressed in the environment 602 is adjusted. In an embodiment, the processor 120 may obtain the image for the iris recognition while the relatively bright visual object is superimposed (or overlaid) on the at least one area 623 and/or 624.

In the operation 970, the processor 120 may adjust brightness of an entire area. The processor 120 may increase the brightness of the entire area.

In operation 980, the processor 120 may obtain the image for the iris recognition. In an embodiment, the processor 120 may obtain the image for the iris recognition while the brightness of the entire area is adjusted.

In operation 990, the processor 120 may authenticate the user. In an embodiment, the processor 120 may authenticate the user 510 based on an iris included in the image for the iris recognition. In an embodiment, the processor 120 may authenticate the user 510 based on the iris included in the image for the iris recognition obtained while the brightness of the partial area is adjusted.

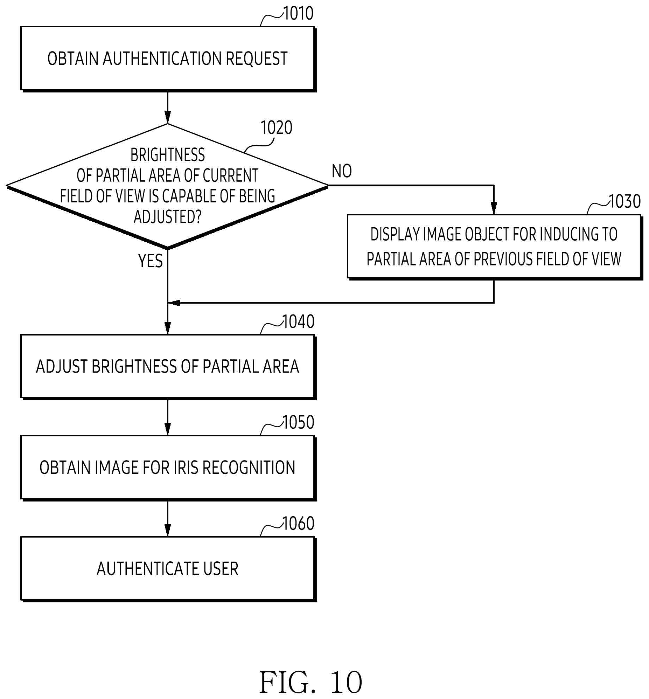

FIG. 10 is a flowchart representing an operation of an electronic device according to an embodiment.

FIG. 10 may be described with reference to FIGS. 1, 2A, 2B, 3A, 3B, 4, 5, 6A, 6B, 6C, 6D, 6E, and 6F.

Referring to FIG. 10, in operation 1010, a processor 120 may obtain an authentication request. The authentication request may be obtained. For example, the processor 120 may obtain the authentication request based on iris recognition. For example, the processor 120 may obtain the authentication request while an environment 501 is provided to a user 510. For example, the processor 120 may obtain the authentication request based on iris recognition generated by a program 140 while the program 140 is being executed. The processor 120 may obtain the authentication request based on the iris recognition while providing augmented reality (AR), virtual reality (VR), or mixed reality (MR) to the user 510.

In operation 1020, the processor 120 may determine whether brightness of a partial area of a current field of view is capable of being adjusted. The processor 120 may determine whether at least one object of which brightness is capable of being adjusted exists in the current field of view (or an environment) of the user 510. For example, the processor 120 may determine whether brightness of an area including a gaze 521 in the environment 501 is capable of being adjusted. For example, the processor 120 may determine whether an object that may be brightly expressed in the environment 501 exists.

In an embodiment, in a case that the at least one object of which brightness is capable of being adjusted exists in the current field of view (or the environment) of the user 510, the processor 120 may determine that the brightness of the partial area is capable of being adjusted. In an embodiment, in a case that the brightness of the area including the gaze 521 in the environment 501 is capable of being adjusted, the processor 120 may determine that the brightness of the partial area is capable of being adjusted. In an embodiment, in a case that an object that may be brightly expressed in the environment 501 exists, the processor 120 may determine that the brightness of the partial area is capable of being adjusted.

In an embodiment, in a case that the at least one object of which brightness is capable of being adjusted does not exist in the current field of view (or the environment) of the user 510, the processor 120 may determine that the brightness of the partial area is capable of being adjusted. In an embodiment, in a case that the brightness of the area including the gaze 521 in the environment 501 is not capable of being adjusted, the processor 120 may determine that the brightness of the partial area is capable of being adjusted. In an embodiment, in a case that the object that may be brightly expressed in the environment 501 does not exist, the processor 120 may determine that the brightness of the partial area is capable of being adjusted.

In the operation 1020, in a case that it is determined that the brightness of the partial area is capable of being adjusted, the processor 120 may perform operation 1040. In the operation 1020, in a case that it is determined that the brightness of the partial area is not capable of being adjusted, the processor 120 may perform operation 1030.

In the operation 1030, the processor 120 may display an image object 622 for inducing to a partial area of a previous field of view. The processor 120 may display the image object 622 guiding movement of the user 510. For example, the processor 120 may display the image object 622 guiding movement of the user 510 from the current field of view (e.g., an environment 605) to the previous field of view (e.g., an environment 606).

In the operation 1040, the processor 120 may adjust the brightness of the partial area.

In an embodiment, the processor 120 may adjust brightness of an area in which the gaze 521 of the user is located in the current field of view (e.g., the environment 605). In an embodiment, the processor 120 may adjust brightness of at least one area 612, 613, and/or 614 of at least one object that may be brightly expressed in the current field of view (e.g., the environment 605). The processor 120 may superimpose (or overlay) a relatively bright visual object on at least one area in the current field of view (e.g., the environment 605).

In an embodiment, the processor 120 may adjust brightness of an area in which the gaze 521 of the user is located in the previous field of view (e.g., the environment 606). In an embodiment, the processor 120 may adjust brightness of at least one area 615 and/or 616 of at least one object that may be brightly expressed in the previous field of view (e.g., the environment 606). The processor 120 may superimpose (or overlay) a relatively bright visual object on at least one area in the previous field of view (e.g., the environment 606).

In operation 1050, the processor 120 may obtain an image for the iris recognition.

In an embodiment, the processor 120 may obtain the image for the iris recognition while the brightness of the area in which the gaze 521 of the user is located in the current field of view (e.g., the environment 605) is adjusted. In an embodiment, the processor 120 may obtain the image for the iris recognition while the brightness of the at least one area 612, 613, and 614 of the at least one object that may be brightly expressed in the current field of view (e.g., the environment 605) is adjusted. In an embodiment, the processor 120 may obtain the image for the iris recognition while the relatively bright visual object is superimposed (or overlaid) on the at least one area in the current field of view (e.g., the environment 605).

In an embodiment, the processor 120 may obtain the image for the iris recognition while the brightness of the area in which the gaze 521 of the user is located in the previous field of view (e.g., the environment 606) is adjusted. In an embodiment, the processor 120 may obtain the image for the iris recognition while the brightness of the at least one area 615 and/or 616 of the at least one object that may be brightly expressed in the previous field of view (e.g., the environment 606) is adjusted. In an embodiment, the processor 120 may obtain the image for the iris recognition while the relatively bright visual object is superimposed (or overlaid) on the at least one area in the previous field of view (e.g., the environment 606).

In operation 1060, the processor 120 may authenticate the user. In an embodiment, the processor 120 may authenticate the user 510 based on an iris included in the image for the iris recognition. In an embodiment, the processor 120 may authenticate the user 510 based on the iris included in the image for the iris recognition obtained while the brightness of the partial area is adjusted.

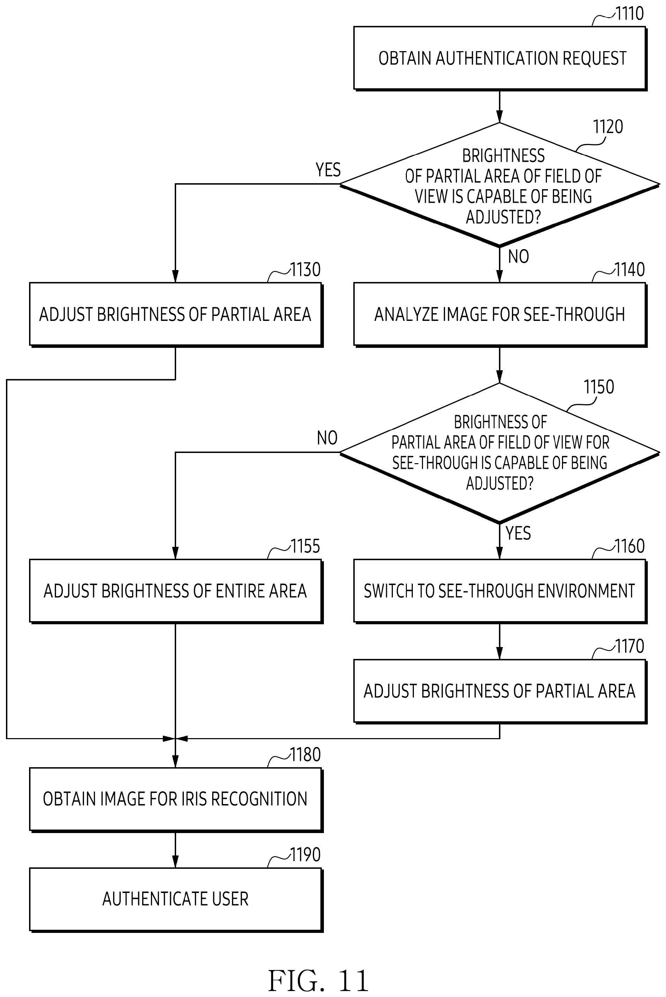

FIG. 11 is a flowchart representing an operation of an electronic device according to an embodiment.

FIG. 11 may be described with reference to FIGS. 1, 2A, 2B, 3A, 3B, 4, 5, 6A, 6B, 6C, 6D, 6E, and 6F.

FIG. 11 may be disclosed when virtual reality (VR) or mixed reality (MR) is provided to a user 510.

Referring to FIG. 11, in operation 1110, a processor 120 may obtain an authentication request. The authentication request may be obtained. For example, the processor 120 may obtain the authentication request based on iris recognition. For example, the processor 120 may obtain the authentication request while an environment 501 is provided to a user 510. For example, the processor 120 may obtain the authentication request based on iris recognition generated by a program 140 while the program 140 is being executed. The processor 120 may obtain the authentication request based on the iris recognition while providing the virtual reality (VR), or the mixed reality (MR) to the user 510.

In operation 1120, the processor 120 may determine whether brightness of a partial area of a field of view is capable of being adjusted. The processor 120 may determine whether at least one object of which brightness is capable of being adjusted exists in a current field of view (or an environment) of the user 510. For example, the processor 120 may determine whether brightness of an area including a gaze 521 in the environment 501 is capable of being adjusted. For example, the processor 120 may determine whether an object that may be brightly expressed in the environment 501 exists.

In an embodiment, in a case that the at least one object of which brightness is capable of being adjusted exists in the current field of view (or the environment) of the user 510, the processor 120 may determine that the brightness of the partial area is capable of being adjusted. In an embodiment, in a case that the brightness of the area including the gaze 521 in the environment 501 is capable of being adjusted, the processor 120 may determine that the brightness of the partial area is capable of being adjusted. In an embodiment, in a case that an object that may be brightly expressed in the environment 501 exists, the processor 120 may determine that the brightness of the partial area is capable of being adjusted.

In an embodiment, in a case that the at least one object of which brightness is capable of being adjusted does not exist in the current field of view (or the environment) of the user 510, the processor 120 may determine that the brightness of the partial area is capable of being adjusted. In an embodiment, in a case that the brightness of the area including the gaze 521 in the environment 501 is not capable of being adjusted, the processor 120 may determine that the brightness of the partial area is capable of being adjusted. In an embodiment, in a case that the object that may be brightly expressed in the environment 501 does not exist, the processor 120 may determine that the brightness of the partial area is capable of being adjusted.

In the operation 1120, in a case that it is determined that the brightness of the partial area is capable of being adjusted, the processor 120 may perform operation 1130. In the operation 1120, in a case that it is determined that the brightness of the partial area is not capable of being adjusted, the processor 120 may perform operation 1140.

In the operation 1130, the processor 120 may adjust the brightness of the partial area. In an embodiment, the processor 120 may adjust brightness of an area 611 where the gaze 521 of the user is located in an environment 601. In an embodiment, the processor 120 may adjust brightness of at least one area 612, 613, and/or 614 of at least one object that may be brightly expressed in an environment 602. The processor 120 may superimpose (or overlay) a relatively bright visual object on at least one area 623 and/or 624 in an environment 607.

In the operation 1140, the processor 120 may analyze an image for see-through. In an embodiment, the processor 120 may analyze an image for providing an environment (or a field of view) for providing see-through (or augmented reality) to the user 510. Herein, the image for providing the augmented reality to the user 510 may be an image obtained through a first camera 481.

For example, the processor 120 may determine whether at least one object of which brightness is capable of being adjusted exists in the image for providing the augmented reality. For example, the processor 120 may determine whether an object that may be brightly expressed in the image for providing the augmented reality exists.

In operation 1150, the processor 120 may determine whether brightness of a partial area of the field of view for see-through is capable of being adjusted. The processor 120 may determine whether at least one object of which brightness is capable of being adjusted exists in the field of view (or the environment) for see-through obtained through the first camera 481. For example, the processor 120 may determine whether an object that may be brightly expressed in the field of view (or the environment) for see-through obtained through the first camera 481 exists.

In an embodiment, in a case that the at least one object of which the brightness is capable of being adjusted exists in the field of view (or the environment) for see-through obtained through the first camera 481, the processor 120 may determine that the brightness of the partial area of the field of view for see-through is capable of being adjusted. In an embodiment, in a case that the object that may be brightly expressed in the field of view (or the environment) for see-through obtained through the first camera 481 exists, the processor 120 may determine that the brightness of the partial area of the field of view for see-through is capable of being adjusted.

In the operation 1150, in a case that it is determined that the brightness of the partial area of the field of view for see-through is capable of being adjusted, the processor 120 may perform operation 1160. In the operation 1150, in a case that it is determined that the brightness of the partial area of the field of view for see-through is not capable of being adjusted, the processor 120 may perform operation 1155.

In the operation 1155, the processor 120 may adjust brightness of an entire area. The processor 120 may increase the brightness of the entire area.

In the operation 1160, the processor 120 may switch to a see-through environment. The processor 120 may display the field of view (or the environment) for see-through obtained through the first camera 481.

In operation 1170, the processor 120 may adjust the brightness of the partial area. In an embodiment, the processor 120 may adjust the brightness of the area 611 where the gaze 521 of the user is located in the environment 601. In an embodiment, the processor 120 may adjust the brightness of the at least one area 612, 613, and/or 614 of the at least one object that may be brightly expressed in the environment 602. The processor 120 may superimpose (or overlay) the relatively bright visual object on the at least one area 623 and/or 624 in the environment 607.

In operation 1180, the processor 120 may obtain the image for the iris recognition. In an embodiment, the processor 120 may obtain the image for the iris recognition while the brightness of the area 611 where the gaze 521 of the user 510 is located in the environment 601 is adjusted. In an embodiment, the processor 120 may obtain the image for the iris recognition while the brightness of the at least one area 612, 613, and/or 614 of the at least one object that may be brightly expressed in the environment 602 is adjusted. In an embodiment, the processor 120 may obtain the image for the iris recognition while the relatively bright visual object is superimposed (or overlaid) on the at least one area 623 and/or 624.

In operation 1190, the processor 120 may authenticate the user. In an embodiment, the processor 120 may authenticate the user 510 based on an iris included in the image for the iris recognition. In an embodiment, the processor 120 may authenticate the user 510 based on the iris included in the image for the iris recognition obtained while the brightness of the partial area is adjusted.

As described above, an electronic device 101, 200, 300, or 401 may comprise at least one display 460, 250, 250-1, 250-2, 350-1, and/or 350-2 arranged to face an eye of a user 510 when the electronic device 101, 200, 300, or 401 is worn by the user 510. The electronic device 101, 200, 300, or 401 may comprise at least one camera 485, 240-1, 240-4, 340-1, and/or 340-2 arranged to face the eye when the electronic device 101, 200, 300, or 401 is worn by the user 510. The electronic device 101, 200, 300, or 401 may comprise at least one processor 120 comprising processing circuitry. The electronic device 101, 200, 300, or 401 may comprise memory 130 comprising one or more storage media storing instructions. The instructions, when executed by the at least one processor 120 individually or collectively, may cause the wearable device 101 to obtain an authentication request of the user 510. The instructions, when executed by the at least one processor 120 individually or collectively, may cause the wearable device 101 to, based on obtaining the authentication request, identify at least one area 611, 612, 613, 614, 615, 616, 623, and/or 624 in an environment 501, 601, 602, 603, 604, 605, 607, 608, or 609 which is shown to the user 510 through the at least one display 460, 250, 250-1, 250-2, 350-1, and/or 350-2. The instructions, when executed by the at least one processor 120 individually or collectively, may cause the wearable device 101 to control the at least one display 460, 250, 250-1, 250-2, 350-1, and/or 350-2 to adjust brightness of the identified at least one area 611, 612, 613, 614, 615, 616, 623, and/or 624. The instructions, when executed by the at least one processor 120 individually or collectively, may cause the wearable device 101 to, during the brightness of the identified at least one area 611, 612, 613, 614, 615, 616, 623, and/or 624 being adjusted, obtain an iris image of the eye through the at least one camera 485, 240-1, 240-4, 340-1, and/or 340-2. The instructions, when executed by the at least one processor 120 individually or collectively, may cause the wearable device 101 to, based on an iris of the eye identified from the iris image, authenticate the user 510.

The processor 120 may cause the wearable device 101 to, in response to obtaining the authentication request, identify a size of the iris of the eye of the user 510. The instructions, when executed by the at least one processor 120 individually or collectively, may cause the wearable device 101 to, in response to that the size of the iris is greater than or equal to a specified size, obtain another iris image of the eye of the user 510 through the at least one camera 485, 240-1, 240-4, 340-1, and/or 340-2, during the brightness not being adjusted. The instructions, when executed by the at least one processor 120 individually or collectively, may cause the wearable device 101 to, in response to that the size of the iris is greater than or equal to a specified size, authenticate the user 510 based on the iris identified from the another iris image. The instructions, when executed by the at least one processor 120 individually or collectively, may cause the wearable device 101 to, in response to that the size of the iris is less than the specified size, authenticate the user 510 based on the iris identified in the iris image obtained during the brightness being adjusted.

The instructions, when executed by the at least one processor 120 individually or collectively, may cause the wearable device 101 to, in response to that an authentication of the user 510 based on the iris identified in the another iris image fails, control the at least one display 460, 250, 250-1, 250-2, 350-1, and/or 350-2 for the brightness of the identified at least one area 611, 612, 613, 614, 615, 616, 623, and/or 624 to be adjusted. The instructions, when executed by the at least one processor 120 individually or collectively, may cause the wearable device 101 to authenticate the user 510 based on the iris identified in the iris image obtained during the brightness being adjusted.

The at least one area 611, 612, 613, 614, 615, 616, 623, and/or 624 may be adjacent to an area where the camera 485, 240-1, 240-4, 340-1, and/or 340-2 is located.

The instructions, when executed by the at least one processor 120 individually or collectively, may cause the wearable device 101 to identify a gaze 521 of the user 510 in an image obtained through the camera 485, 240-1, 240-4, 340-1, and/or 340-2. The instructions, when executed by the at least one processor 120 individually or collectively, may cause the wearable device 101 to identify the at least one area 611 including a point where the gaze 521 of the user 510 is directed.

The instructions, when executed by the at least one processor 120 individually or collectively, may cause the wearable device 101 to identify a gaze 521 of the user 510 in an image obtained through the camera 485, 240-1, 240-4, 340-1, and/or 340-2. The instructions, when executed by the at least one processor 120 individually or collectively, may cause the wearable device 101 to display an image object 621 for guiding the gaze 521 to move to the at least one area 612, 613, 614, 615, 616, 623, and/or 624 through the at least one display 460, 250, 250-1, 250-2, 350-1, and/or 350-2.

The instructions, when executed by the at least one processor 120 individually or collectively, may cause the wearable device 101 to adjust a transparency of an area of the at least one display 460, 250, 250-1, 250-2, 350-1, and/or 350-2 corresponding to the identified at least one area 611, 612, 613, 614, 615, 616, 623, and/or 624 for the brightness of the identified at least one area 611, 612, 613, 614, 615, 616, 623, and/or 624 to be adjusted.

The instructions, when executed by the at least one processor 120 individually or collectively, may cause the wearable device 101 to, based on the at least one area 611, 612, 613, 614, 615, 616, 623, and/or 624 not being identified, identify at least some other area 615 and/or 616 in a previous environment 606 previously seen by the user 510. The instructions, when executed by the at least one processor 120 individually or collectively, may cause the wearable device 101 to, based on the at least some other area being identified in the previous environment 501, 601, 602, 603, 604, 605, 607, 608, or 609, display an image object 622 for guiding the user 510 to move to the previous environment 501, 601, 602, 603, 604, 605, 607, 608, or 609 through the at least one display 460, 250, 250-1, 250-2, 350-1, and/or 350-2.

The electronic device 101, 200, 300, or 401 may further comprise at least one another camera 481 arranged to photograph a surrounding environment 501, 601, 602, 603, 604, 605, or 607. The instructions, when executed by the at least one processor 120 individually or collectively, may cause the wearable device 101 to obtain the authentication request while the environment 608 or 609 is displayed on the at least one display 460, 250, 250-1, 250-2, 350-1, and/or 350-2. The instructions, when executed by the at least one processor 120 individually or collectively, may cause the wearable device 101 to, in response to obtaining the authentication request, identify at least some other area 611, 612, 613, 614, 615, 616, 623, and/or 624 in the surrounding environment 501, 601, 602, 603, 604, 605, or 607 obtained through the at least one another camera 481. The instructions, when executed by the at least one processor 120 individually or collectively, may cause the wearable device 101 to, in response to that the at least some other area 611, 612, 613, 614, 615, 616, 623, and/or 624 is identified, control the at least one display 460, 250, 250-1, 250-2, 350-1, and/or 350-2 for the user 510 to see the surrounding environment 501, 601, 602, 603, 604, 605, or 607 instead of the environment 608 or 609. The instructions, when executed by the at least one processor 120 individually or collectively, may cause the wearable device 101 to obtain the iris image while the surrounding environment 501, 601, 602, 603, 604, 605, or 607 is shown to the user 510. The instructions, when executed by the at least one processor 120 individually or collectively, may cause the wearable device 101 to authenticate the user 510 based on the iris identified in the iris image.

The instructions, when executed by the at least one processor 120 individually or collectively, may cause the wearable device 101 to identify at least one first area 612, 613, and/or 614 that has specified first brightness or more, and at least one second area that has specified second brightness or less, among a plurality of area in the environment 501, 601, 602, 603, 604, 605, 607, 608, or 609. The instructions, when executed by the at least one processor 120 individually or collectively, may cause the wearable device 101 to, based on the at least one first area 612, 613, and/or 614 and the at least one second area being identified, control the at least one display 460, 250, 250-1, 250-2, 350-1, and/or 350-2 such that brightness of the at least one first area 612, 613, and/or 614 is decreased and brightness of the at least one second area is increased.

The instructions, when executed by the at least one processor 120 individually or collectively, may cause the wearable device 101 to identify the at least one area 611, 612, 613, 614, 615, 616, 623, and/or 624 of which brightness is capable of being adjusted among a plurality of areas in the environment 501, 601, 602, 603, 604, 605, 607, 608, or 609. The instructions, when executed by the at least one processor 120 individually or collectively, may cause the wearable device 101 to, based on the at least one area 611, 612, 613, 614, 615, 616, 623, and/or 624 being identified, control the at least one display 460, 250, 250-1, 250-2, 350-1, and/or 350-2 for the brightness of the at least one area 611, 612, 613, 614, 615, 616, 623, and/or 624 to be increased.

The instructions, when executed by the at least one processor 120 individually or collectively, may cause the wearable device 101 to identify a gaze 521 of the user 510 in an image obtained through the camera 485, 240-1, 240-4, 340-1, and/or 340-2. The instructions, when executed by the at least one processor 120 individually or collectively, may cause the wearable device 101 to identify the at least one area 611, 612, 613, 614, 623, and/or 624 within a specified distance from the gaze 521 among one or more areas of which brightness is capable of being adjusted in the environment 501, 601, 602, 603, 604, 605, or 607. The instructions, when executed by the at least one processor 120 individually or collectively, may cause the wearable device 101 to, based on the at least one area 611, 612, 613, 614, 623, and/or 624 being identified, control the at least one display 460, 250, 250-1, 250-2, 350-1, and/or 350-2 for the brightness of the at least one area 611, 612, 613, 614, 623, and/or 624 to be increased.

The at least one area 611, 612, 613, 614, 615, 616, 623, and/or 624 may be visible to the user 510 as light from the at least one area 611, 612, 613, 614, 615, 616, 623, and/or 624 penetrate the at least one display 460, 250, 250-1, 250-2, 350-1, and/or 350-2. The instructions, when executed by the at least one processor 120 individually or collectively, may cause the wearable device 101 to adjust the brightness of the identified at least one area 611, 612, 613, 614, 615, 616, 623, and/or 624 by displaying an image object corresponding to the at least one area 611, 612, 613, 614, 615, 616, 623, and/or 624 visible to the user 510 on the at least one display 460, 250, 250-1, 250-2, 350-1, and/or 350-2.

As described above, a method may be executed by an electronic device 101, 200, 300, or 401 including at least one display 460, 250, 250-1, 250-2, 350-1, and/or 350-2 arranged to face an eye of a user 510 when the electronic device 101, 200, 300, or 401 is worn by the user 510, and at least one camera 485, 240-1, 240-4, 340-1, and/or 340-2 arranged to face the eye when the electronic device 101, 200, 300, or 401 is worn by the user 510. The method may comprise obtaining an authentication request of the user 510. The method may comprise, based on obtaining the authentication request, identifying at least one area 611, 612, 613, 614, 615, 616, 623, and/or 624 in an environment 501, 601, 602, 603, 604, 605, 607, 608, or 609 which is shown to the user 510 through the at least one display 460, 250, 250-1, 250-2, 350-1, and/or 350-2. The method may comprise controlling the at least one display 460, 250, 250-1, 250-2, 350-1, and/or 350-2 to adjust brightness of the identified at least one area 611, 612, 613, 614, 615, 616, 623, and/or 624. The method may comprise, during the brightness of the identified at least one area 611, 612, 613, 614, 615, 616, 623, and/or 624 being adjusted, obtaining an iris image of the eye through the at least one camera 485, 240-1, 240-4, 340-1, and/or 340-2. The method may comprise, based on an iris of the eye identified from the iris image, authenticating the user 510.

The method may comprise, in response to obtaining the authentication request, identifying a size of the iris of the eye of the user 510. The method may comprise, in response to that the size of the iris is greater than or equal to a specified size, obtaining another iris image of the eye of the user 510 through the at least one camera 485, 240-1, 240-4, 340-1, and/or 340-2, during the brightness not being adjusted, and authenticating the user 510 based on the iris identified from the another iris image. The method may comprise, in response to that the size of the iris is less than the specified size, authenticating the user 510 based on the iris identified in the iris image obtained during the brightness being adjusted.

The method may comprise, in response to that an authentication of the user 510 based on the iris identified in the another iris image fails, controlling the at least one display 460, 250, 250-1, 250-2, 350-1, and/or 350-2 for the brightness of the identified at least one area 611, 612, 613, 614, 615, 616, 623, and/or 624 to be adjusted. The method may comprise authenticating the user 510 based on the iris identified in the iris image obtained during the brightness being adjusted.

The method may comprise identifying a gaze 521 of the user 510 in an image obtained through the camera 485, 240-1, 240-4, 340-1, and/or 340-2. The method may comprise identifying the at least one area 611 including a point where the gaze 521 of the user 510 is directed. The method may comprise identifying a gaze 521 of the user 510 in an image obtained through the camera 485, 240-1, 240-4, 340-1, and/or 340-2. The method may comprise displaying an image object for guiding the gaze 521 to move to the at least one area 612, 613, 614, 615, 616, 623, and/or 624 through the at least one display 460, 250, 250-1, 250-2, 350-1, and/or 350-2. The method may comprise adjusting a transparency of an area of the at least one display 460, 250, 250-1, 250-2, 350-1, and/or 350-2 corresponding to the identified at least one area 611, 612, 613, 614, 623, and/or 624 for the brightness of the identified at least one area 611, 612, 613, 614, 623, and/or 624 to be adjusted. The method may comprise obtaining the authentication request while the environment 608 or 609 is displayed on the at least one display 460, 250, 250-1, 250-2, 350-1, and/or 350-2. The method may comprise, in response to obtaining the authentication request, identifying at least some other area 611, 612, 613, 614, 615, 616, 623, and/or 624 in a surrounding environment 501, 601, 602, 603, 604, 605, or 607 obtained through at least one another camera 481 arranged to photograph the surrounding environment 501, 601, 602, 603, 604, 605, or 607. The method may comprise, in response to that the at least some other area 611, 612, 613, 614, 615, 616, 623, and/or 624 is identified, controlling the at least one display 460, 250, 250-1, 250-2, 350-1, and/or 350-2 for the user 510 to see the surrounding environment 501, 601, 602, 603, 604, 605, or 607 instead of the environment 608 or 609. The method may comprise obtaining the iris image while the surrounding environment 501, 601, 602, 603, 604, 605, or 607 is shown to the user 510. The method may comprise authenticating the user 510 based on the iris identified in the iris image.

As described above, a non-transitory computer readable storage medium may store a program 140 comprising instructions. The instructions, when executed by at least one processor 120 of an electronic device 101, 200, 300, or 401 comprising at least one display 460, 250, 250-1, 250-2, 350-1, and/or 350-2 arranged to face an eye of a user 510 when the electronic device 101, 200, 300, or 401 is worn by the user 510 and at least one camera 485, 240-1, 240-4, 340-1, and/or 340-2 arranged to face the eye when the electronic device 101, 200, 300, or 401 is worn by the user 510, may be configured to cause the electronic device 101, 200, 300, or 401 to obtain an authentication request of the user 510. The processor 120 may be configured to, based on obtaining the authentication request, identify at least one area 611, 612, 613, 614, 615, 616, 623, and/or 624 in an environment 501, 601, 602, 603, 604, 605, 607, 608, or 609 which is shown to the user 510 through the at least one display 460, 250, 250-1, 250-2, 350-1, and/or 350-2. The instructions, when executed by the at least one processor 120, may be configured to cause the electronic device 101, 200, 300, or 401 to control the at least one display 460, 250, 250-1, 250-2, 350-1, and/or 350-2 to adjust brightness of the identified at least one area 611, 612, 613, 614, 615, 616, 623, and/or 624. The instructions, when executed by the at least one processor 120, may be configured to cause the electronic device 101, 200, 300, or 401 to, during the brightness of the identified at least one area 611, 612, 613, 614, 615, 616, 623, and/or 624 being adjusted, obtain an iris image of the eye through the at least one camera 485, 240-1, 240-4, 340-1, and/or 340-2. The instructions, when executed by the at least one processor 120, may be configured to cause the electronic device 101, 200, 300, or 401 to, based on an iris of the eye identified from the iris image, authenticate the user 510.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A wearable device (101, 200, 300, 401), comprising:
at least one display (460, 250, 250-1, 250-2, 350-1, 350-2) arranged to face an eye of a user (510) when the wearable device (101, 200, 300, 401) is worn by the user (510),
at least one camera (485, 240-1, 240-4, 340-1, 340-2) arranged to face the eye when the wearable device (101, 200, 300, 401) is worn by the user (510),
at least one processor (120) including processing circuitry, and
memory (130) comprising one or more storage media storing instructions
wherein the instructions, when executed by the at least one processor (120) individually or collectively, cause the wearable device (101) to:
obtain an authentication request of the user (510),
based on obtaining the authentication request, identify at least one area (611, 612, 613, 614, 615, 616, 623, 624) in an environment (501, 601, 602, 603, 604, 605, 607, 608, 609) which is shown to the user (510) through the at least one display (460, 250, 250-1, 250-2, 350-1, 350-2),
control the at least one display (460, 250, 250-1, 250-2, 350-1, 350-2) to adjust brightness of the identified at least one area (611, 612, 613, 614, 615, 616, 623, 624),
during the brightness of the identified at least one area (611, 612, 613, 614, 615, 616, 623, 624) being adjusted, obtain an iris image of the eye through the at least one camera (485, 240-1, 240-4, 340-1, 340-2), and
based on an iris of the eye identified from the iris image, authenticate the user (510).

2. The wearable device (101) of claim 1,
wherein the instructions, when executed by the at least one processor (120) individually or collectively, cause the wearable device (101) to:
in response to obtaining the authentication request, identify a size of the iris of the eye of the user (510),
in response to that the size of the iris is greater than or equal to a specified size, obtain another iris image of the eye of the user (510) through the at least one camera (485, 240-1, 240-4, 340-1, 340-2), during the brightness of the identified at least one area not being adjusted, and authenticate the user (510) based on the iris identified from the another iris image, and
in response to that the size of the iris is less than the specified size, authenticate the user (510) based on the iris identified in the iris image obtained during the brightness of the identified at least one area being adjusted.

3. The wearable device (101) of claim 2,
wherein the instructions, when executed by the at least one processor (120) individually or collectively, cause the wearable device (101) to:
in response to that an authentication of the user (510) based on the iris identified in the another iris image fails, control the at least one display (460, 250, 250-1, 250-2, 350-1, 350-2) for the brightness of the identified at least one area (611, 612, 613, 614, 615, 616, 623, 624) to be adjusted, and
authenticate the user (510) based on the iris identified in the iris image obtained during the brightness of the identified at least one area (611, 612, 613, 614, 615, 616, 623, 624) being adjusted.

4. The wearable device (101) of claim 1,
wherein the at least one area (611, 612, 613, 614, 615, 616, 623, 624) is adjacent to an area where the camera (485, 240-1, 240-4, 340-1, 340-2) is located.

5. The wearable device (101) of claim 1,
wherein the instructions, when executed by the at least one processor (120) individually or collectively, cause the wearable device (101) to:
identify a gaze (521) of the user (510) in an image obtained through the camera (485, 240-1, 240-4, 340-1, 340-2), and
identify the at least one area (611) including a point where the gaze (521) of the user (510) is directed.

6. The wearable device (101) of claim 1,
wherein the instructions, when executed by the at least one processor (120) individually or collectively, cause the wearable device (101) to:
identify a gaze (521) of the user (510) in an image obtained through the camera (485, 240-1, 240-4, 340-1, 340-2), and
display an image object (621) for guiding the gaze (521) to move to the at least one area (612, 613, 614, 615, 616, 623, 624) through the at least one display (460, 250, 250-1, 250-2, 350-1, 350-2).

7. The wearable device (101) of claim 1,
wherein the instructions, when executed by the at least one processor (120) individually or collectively, cause the wearable device (101) to:
adjust a transparency of an area of the at least one display (460, 250, 250-1, 250-2, 350-1, 350-2) corresponding to the identified at least one area (611, 612, 613, 614, 615, 616, 623, 624) for the brightness of the identified at least one area (611, 612, 613, 614, 615, 616, 623, 624) to be adjusted.

8. The wearable device (101) of claim 7,
wherein the instructions, when executed by the at least one processor (120) individually or collectively, cause the wearable device (101) to:
based on the at least one area (611, 612, 613, 614, 615, 616, 623, 624) not being identified, identify at least some other area (615, 616) in a previous environment (606) previously seen by the user (510), and
based on the at least some other area being identified in the previous environment (501, 601, 602, 603, 604, 605, 607, 608, 609), display an image object (622) for guiding the user (510) to move to the previous environment (501, 601, 602, 603, 604, 605, 607, 608, 609) through the at least one display (460, 250, 250-1, 250-2, 350-1, 350-2).

9. The wearable device (101) of claim 1, further comprising:
at least one another camera (481) arranged to photograph a surrounding environment (501, 601, 602, 603, 604, 605, 607),
wherein the instructions, when executed by the at least one processor (120) individually or collectively, cause the wearable device (101) to:
obtain the authentication request while the environment (608, 609) is displayed on the at least one display (460, 250, 250-1, 250-2, 350-1, 350-2),
in response to obtaining the authentication request, identify at least some other area (611, 612, 613, 614, 615, 616, 623, 624) in the surrounding environment (501, 601, 602, 603, 604, 605, 607) obtained through the at least one another camera (481),
in response to that the at least some other area (611, 612, 613, 614, 615, 616, 623, 624) is identified, control the at least one display (460, 250, 250-1, 250-2, 350-1, 350-2) for the user (510) to see the surrounding environment (501, 601, 602, 603, 604, 605, 607) instead of the environment (608, 609),
obtain the iris image while the surrounding environment (501, 601, 602, 603, 604, 605, 607) is shown to the user (510), and
authenticate the user (510) based on the iris identified in the iris image.

10. The wearable device (101) of claim 1,
wherein the instructions, when executed by the at least one processor (120) individually or collectively, cause the wearable device (101) to:
identify at least one first area (612, 613, 614) that has specified first brightness or more, and at least one second area that has specified second brightness or less, among a plurality of area in the environment (501, 601, 602, 603, 604, 605, 607, 608, 609), and
based on the at least one first area (612, 613, 614) and the at least one second area being identified, control the at least one display (460, 250, 250-1, 250-2, 350-1, 350-2) such that brightness of the at least one first area (612, 613, 614) is decreased and brightness of the at least one second area is increased.

11. The wearable device (101) of claim 1,
wherein the instructions, when executed by the at least one processor (120) individually or collectively, cause the wearable device (101) to:
identify the at least one area (611, 612, 613, 614, 615, 616, 623, 624) of which brightness is capable of being adjusted among a plurality of areas in the environment (501, 601, 602, 603, 604, 605, 607, 608, 609), and
based on the at least one area (611, 612, 613, 614, 615, 616, 623, 624) being identified, control the at least one display (460, 250, 250-1, 250-2, 350-1, 350-2) for the brightness of the at least one area (611, 612, 613, 614, 615, 616, 623, 624) to be increased.

12. The wearable device (101) of claim 11,
wherein the instructions, when executed by the at least one processor (120) individually or collectively, cause the wearable device (101) to:
identify a gaze (521) of the user (510) in an image obtained through the camera (485, 240-1, 240-4, 340-1, 340-2),
identify the at least one area (611, 612, 613, 614, 623, 624) within a specified distance from the gaze (521) among one or more areas of which brightness is capable of being adjusted in the environment (501, 601, 602, 603, 604, 605, 607), and
based on the at least one area (611, 612, 613, 614, 623, 624) being identified, control the at least one display (460, 250, 250-1, 250-2, 350-1, 350-2) for the brightness of the at least one area (611, 612, 613, 614, 623, 624) to be increased.

13. The wearable device (101) of claim 1,
wherein the at least one area (611, 612, 613, 614, 615, 616, 623, 624) is visible to the user (510) as light from the at least one area (611, 612, 613, 614, 615, 616, 623, 624) penetrate the at least one display (460, 250, 250-1, 250-2, 350-1, 350-2), and
wherein the instructions, when executed by the at least one processor (120) individually or collectively, cause the wearable device (101) to:
adjust the brightness of the identified at least one area (611, 612, 613, 614, 615, 616, 623, 624) by displaying an image object corresponding to the at least one area (611, 612, 613, 614, 615, 616, 623, 624) visible to the user (510) on the at least one display (460, 250, 250-1, 250-2, 350-1, 350-2).

14. A method executed by a wearable device (101, 200, 300, 401) including at least one display (460, 250, 250-1, 250-2, 350-1, 350-2) arranged to face an eye of a user (510) when the wearable device (101, 200, 300, 401) is worn by the user (510), and at least one camera (485, 240-1, 240-4, 340-1, 340-2) arranged to face the eye when the wearable device (101, 200, 300, 401) is worn by the user (510), comprising:
obtaining an authentication request of the user (510),
based on obtaining the authentication request, identifying at least one area (611, 612, 613, 614, 615, 616, 623, 624) in an environment (501, 601, 602, 603, 604, 605, 607, 608, 609) which is shown to the user (510) through the at least one display (460, 250, 250-1, 250-2, 350-1, 350-2),
controlling the at least one display (460, 250, 250-1, 250-2, 350-1, 350-2) to adjust brightness of the identified at least one area (611, 612, 613, 614, 615, 616, 623, 624),
during the brightness of the identified at least one area (611, 612, 613, 614, 615, 616, 623, 624) being adjusted, obtaining an iris image of the eye through the at least one camera (485, 240-1, 240-4, 340-1, 340-2), and
based on an iris of the eye identified from the iris image, authenticating the user (510).

15. The method of claim 14, comprising:
in response to obtaining the authentication request, identifying a size of the iris of the eye of the user (510),
in response to that the size of the iris is greater than or equal to a specified size, obtaining another iris image of the eye of the user (510) through the at least one camera (485, 240-1, 240-4, 340-1, 340-2), during the brightness of the identified at least one area not being adjusted, and authenticating the user (510) based on the iris identified from the another iris image, and
in response to that the size of the iris is less than the specified size, authenticating the user (510) based on the iris identified in the iris image obtained during the brightness of the identified at least one area being adjusted.
